# EUROPEAN PATENT APPLICATION

(11) **EP 4 840 593 A1**
(43) Date of publication of application: **18.11.2026**
(21) Application number: 25751470.3
(22) Date of filing: 05.02.2025
(51) Int. Cl.: B25J 9/16, G05D 1/00

(54) **ROBOT MOTION CONTROL METHOD AND APPARATUS, AND COMPUTER DEVICE AND STORAGE MEDIUM**

(30) Priority: 06.02.2024 CN 202410174125
(71) Applicant: Tencent Technology (Shenzhen) Company Limited, Shenzhen, Guangdong 518057 (CN)
(72) Inventor: CHEN, Lipeng, Shenzhen, Guangdong 518057 (CN); ZHENG, Yu, Shenzhen, Guangdong 518057 (CN)
(74) Representative: Reddie & Grose LLP
(86) International application number: PCT/CN2025/075704
(87) International publication number: WO 2025/167870

(57) **Abstract**

A robot motion control method and apparatus, and a computer device and a storage medium. The robot motion control method comprises: acquiring a path parameterization model (401), wherein the path parameterization model is obtained by means of performing training on the basis of sample trajectory data, and the sample trajectory data comprises respective sample coordinates of at least two sample path points in a sample path, and respective sample timestamps; acquiring a first path, and acquiring respective first coordinates of at least two first path points in the first path (402); and determining first trajectory data by means of the path parameterization model and on the basis of the first coordinates, wherein the first trajectory data comprises first timestamps respectively corresponding to the at least two first path points (403), and a robot arrives at the at least two first path points at first path point moments indicated by the first timestamps. The robot motion control method ensures that trajectory data conforms to the motion rule of a training object, and improves the rationality of the trajectory data; thus, the motion of a robot better matches motion habits of the training object.

## Description

### RELATED APPLICATION

This application claims priority to Chinese Patent Application No. 202410174125.X, entitled "PATH PARAMETERIZATION METHOD AND APPARATUS, COMPUTER DEVICE, AND STORAGE MEDIUM" filed on February 6, 2024.

### FIELD OF THE TECHNOLOGY

Embodiments of this application relate to the field of computer technologies, and in particular, to a method and an apparatus for controlling robot motion, a computer device, and a storage medium.

### BACKGROUND OF THE DISCLOSURE

With development of computer technologies and wide application of robots, safe and proper motion planning for robots has become a research hotspot, and path parameterization is a very important one in motion planning for robots. Path parameterization refers to conversion of path data of a path into trajectory data for a given robot path when a system constraint condition is satisfied. The trajectory data not only includes the path data, but also includes a timestamp when the robot passes through each path point in the path.

A commonly used robot motion control method in related technologies is time-optimal path parameterization (TOPP). The TOPP is typically intended to shorten the time for passing through a path to the greatest extent, so that a robot can pass through the path quickly.

However, the TOPP only concerns the time for passing through a path, resulting in that trajectory data obtained after conversion of path data does not conform to a law of motion of humans when passing through a path, and the rationality of the trajectory data is low.

### SUMMARY

Embodiments of this application provide a method and an apparatus for controlling robot motion, a computer device, and a storage medium. Trajectory data generated by a path parameterization model includes features of a training object, better conforms to a law of motion of a virtual object, and improves the rationality of the trajectory data. The technical solutions are as follows:

According to a first aspect, a method for controlling robot motion is provided, including:
acquiring a path parameterization model, the path parameterization model being trained on sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path;
acquiring a first path, and respective first coordinates of at least two first path points in the first path; and
determining, by the path parameterization model, first trajectory data based on the first coordinates, the first trajectory data including respective first timestamps corresponding to the at least two first path points, and the first trajectory data being used for controlling a robot to move on the first path in a manner that the robot reaches the at least two first path points at respective first path point instants indicated by the first timestamps.

According to another aspect, a method for controlling robot motion is provided, including:
acquiring a path parameterization model, the path parameterization model being trained on sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path;
acquiring a second path, and at least two second timestamps;
determining, by the path parameterization model, second trajectory data based on the second timestamps, the second trajectory data including respective second coordinates corresponding to the at least two second path points, and the second trajectory data being used for controlling a robot to move on the second path in a manner that the robot reaches the at least two second path points at respective second path point instants indicated by the second timestamps.

According to still another aspect, an apparatus for controlling robot motion is provided, including:
a model acquiring module, configured to acquire a path parameterization model, the path parameterization model being trained on sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path;
a path acquiring module, configured to acquire a first path, and respective first coordinates of at least two first path points in the first path; and
a path parameterization module, configured to determine first trajectory data based on the first coordinates, the first trajectory data including respective first timestamps corresponding to the at least two first path points, and the first trajectory data being used for controlling a robot to move on the first path in a manner that the robot reaches the at least two first path points at respective first path point instants indicated by the first timestamps.

According to still another aspect, an apparatus for controlling robot motion is provided, including:
a model acquiring module, configured to acquire a path parameterization model, the path parameterization model being trained on sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path;
a path acquiring module, configured to acquire a second path, and at least two second timestamps;
a path parameterization module, configured to determine, by the path parameterization model, second trajectory data based on the second timestamps, the second trajectory data including respective second coordinates corresponding to at least two second path points, and the second trajectory data being used for controlling a robot to move on the second path in a manner that the robot reaches the at least two second path points at respective second path point instants indicated by the second timestamps.

According to still another aspect, a computer device is provided, including a processor and a memory, the memory having at least one computer program stored therein, and the at least one computer program being loaded and executed by the processor to implement operations executed in the method for controlling robot motion according to the aforementioned aspects.

According to still another aspect, a computer-readable storage medium is provided, having at least one computer program stored therein, the at least one computer program being loaded and executed by a processor to implement operations executed in the method for controlling robot motion according to the aforementioned aspects.

According to still another aspect, a computer program product is provided, including a computer program, the computer program being loaded and executed by a processor to implement operations executed in the method for controlling robot motion according to the aforementioned aspects.

In the embodiments of this application, the path parameterization model is trained based on the sample trajectory data. The sample trajectory data includes the respective sample coordinates and sample timestamps of the at least two sample path points in the sample path, and the sample timestamps indicate the sample path point instants at which the training object reaches the at least two sample path points respectively in the process of passing through the sample path. Therefore, the sample trajectory data is trajectory data conforming to the law of motion of the training object, and the trained path parameterization model has an ability to generate the trajectory data conforming to the law of motion of the training object. Therefore, by determining trajectory data corresponding to path data of a robot using the path parameterization model, it is ensured that the trajectory data includes features of the training object, better conforms to the law of motion of the training object, and improves the rationality of the trajectory data. When the trajectory data is applied to control the robot to move on the path, the motion of the robot better conforms to a motion habit of the training object.

### BRIEF DESCRIPTION OF THE DRAWINGS

FIG. 1 is a schematic diagram of an implementation environment provided in an embodiment of this application.
FIG. 2 is a flowchart of a path parameterization model training method provided in an embodiment of this application.
FIG. 3 is a flowchart of another path parameterization model training method provided in an embodiment of this application.
FIG. 4 is a flowchart of a method for controlling robot motion provided in an embodiment of this application.
FIG. 5 is a schematic structural diagram of a path parameterization model provided in an embodiment of this application.
FIG. 6 is a flowchart of another method for controlling robot motion provided in an embodiment of this application.
FIG. 7 is a schematic structural diagram of another path parameterization model provided in an embodiment of this application.
FIG. 8 is a comparison diagram of trajectories determined by a TOPP method provided in an embodiment of this application and a method for controlling robot motion provided in an embodiment of this application.
FIG. 9 is a schematic diagram of a learning curve of a path parameterization model provided in an embodiment of this application.
FIG. 10 is a schematic diagram of embedded features provided in an embodiment of this application.
FIG. 11 is a schematic diagram of a speed curve provided in an embodiment of this application.
FIG. 12 is a schematic diagram of a trajectory provided in an embodiment of this application.
FIG. 13 is a schematic structural diagram of an apparatus for controlling robot motion provided in an embodiment of this application.
FIG. 14 is a schematic structural diagram of another apparatus for controlling robot motion provided in an embodiment of this application.
FIG. 15 is a schematic structural diagram of a computer device provided in an embodiment of this application.

### DESCRIPTION OF EMBODIMENTS

To make the objectives, technical solutions, and advantages of embodiments of this application clearer, implementations of this application are further described in detail below with reference to the accompanying drawings.

The terms "first", "second", and the like used in this application may be used for describing various concepts in this specification, but not limiting the concepts unless otherwise specified. These terms are used only for distinguishing a concept from another. For example, without departing from the scope of this application, a first sequence may be referred to as a second sequence, and similarly, a second sequence may be referred to as a first sequence.

"At least two" refers to two or more than two. For example, "at least two sequences" may refer to two sequences, three sequences, or any integer number (greater than or equal to two) of sequences. "Each" refers to each of at least two. For example, "each sequence" refers to each of at least two sequences, and if there are three sequences, "each sequence" refers to each of the three sequences.

Information (including but not limited to user device information and user personal information), data (including but not limited to data for analysis, stored data, displayed data and inputted data), and signals (including but not limited to signals transmitted between user terminals and other devices) involved in this application are all fully authorized by users or relevant parties, and collection, use and processing of relevant data need to comply with relevant laws, regulations, and standards of relevant countries and regions.

Artificial intelligence (AI) is a theory, method, technology, and application system using a digital computer or a machine controlled by the digital computer to simulate, extend, and expand human intelligence, perceive an environment, acquire knowledge, and obtain an optimal result by using the knowledge. In other words, AI is a comprehensive technology in computer science and attempts to understand the essence of intelligence and produce a new intelligent machine that can react in a mode similar to human intelligence. AI is to study design principles and implementation methods of various intelligent machines, to enable the machines to have functions of perception, inference, and decision making.

AI technologies belong to a comprehensive subject, and involves a wide range of fields including both hardware-level technologies and software-level technologies. Basic AI technologies typically include technologies such as sensors, dedicated AI chips, cloud computing, distributed storage, big data processing technologies, pre-training model technologies, operating/interactive systems, and electromechanical integration. A pre-training model is also referred to as a large model or a basic model, and may be widely applied to downstream tasks in various large directions of AI after fine tuning. The software technologies of AI mainly include some major directions such as computer vision technologies, speech processing technologies, natural language processing technologies, machine learning/deep learning, automated driving, and smart transportation.

With research and progress, the AI technologies are researched and applied in many fields, such as common smart home, intelligent wearable devices, virtual assistants, intelligent speakers, intelligent marketing, unmanned driving, automatic driving, unmanned aerial vehicles, digital twins, virtual humans, robots, AI-generated contents, conversational interaction, intelligent healthcare, intelligent customer service, and game AI. It is believed that with development of technologies, the AI technologies will be applied in more fields and achieve increasingly important value.

A pre-training model (PTM), also referred to as a cornerstone model or a large model, refers to a deep neural network (DNN) having large parameters, and is trained on massive unmarked data. A function approximation ability of the DNN having large parameters enables the PTM to extract common features from data. The PTM is applicable to downstream tasks after fine tuning, parameter-efficient fine-tuning (PEFT), prompt-tuning, and other technologies. Therefore, the pre-training model may achieve an ideal effect in few-shot or zero-shot scenarios. PTMs may be classified into language models, visual models, speech models, multimodal models, and the like according to the modalities of processed data. A multimodal model refers to a model in which feature representation in two or more data modalities is established. PTMs are important tools for outputting AI-generated contents, and may also be used as general interfaces for connecting a plurality of specific task models.

The solutions provided in the embodiments of this application relate to AI technologies, and are specifically described with reference to the following embodiments.

A method for controlling robot motion provided in an embodiment of this application is applied to a computer device, and the computer device includes a terminal, a server, a robot controller, or other devices.

In a possible implementation, a computer program involved in the embodiments of this application may be deployed and executed in one computer device, or in a plurality of computer devices at one location, or in a plurality of computer devices distributed at a plurality of locations and connected via a communication network, where the plurality of computer devices distributed at the plurality of locations and connected via the communication network can form a blockchain system.

In a possible implementation, the computer device in the embodiments of this application is a node in a blockchain system. The node can store data of a robot in a blockchain, and then the node or a node corresponding to another device in the blockchain may query the data of the robot by accessing the blockchain.

In some embodiments, the terminal is a smart phone, a tablet computer, a notebook computer, a desktop computer, a smart speaker, a smart watch, a smart game console, a smart television, or the like, which is not limited thereto.

In some embodiments, the server is an independent physical server, a server cluster or a distributed system including a plurality of physical servers, or a cloud server for providing basic cloud computing services such as a cloud service, a cloud database, cloud computing, a cloud function, cloud storage, a network service, cloud communication, a middleware service, a domain name service, a security service, a content delivery network (CDN), a big data platform, and an AI platform.

In some embodiments, the robot controller is an apparatus for controlling the robot to complete a particular action or task according to an instruction and sensing information. To be specific, the robot controller is configured to control a moving trajectory of the robot, an action executed by the robot, posture changes of parts of the robot, and the like.

In a possible implementation, the robot controller is on the robot and is a part of the robot. In another possible implementation, the robot controller is an electronic device independent of the robot, and the robot controller is in wired or wireless connection with the robot.

The robot is an intelligent machine that can work semi-autonomously or fully autonomously, and can execute tasks such as moving, throwing, and striking by means of programming and automatic control. The robot may be a semi-mobile robot, namely, the robot is entirely fixed at a position and only a part of the robot may move. Or, the robot may be a mobile robot which may entirely move. The robot may be of multiple types such as unmanned aerial vehicles, distribution robots, cooking robots, and juggling robots. The embodiments of this application may be applied to various scenarios, including but not limited to cloud technologies, AI, intelligent transportation, and the like.

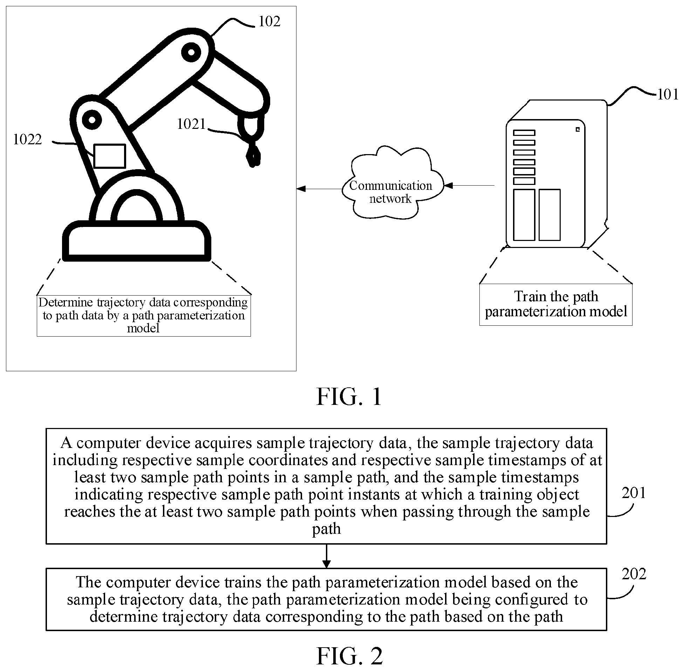

FIG. 1 is a schematic diagram of an implementation environment provided in an embodiment of this application. Referring to FIG. 1, the implementation environment includes a server 101 and a robot 102. The server 101 is connected to the robot 102 via a communication network. The robot 102 includes an end effector 1021 and a robot controller 1022. The end effector 1021 is any tool that is connected to an edge of the robot and has a particular function, including a robot gripper, a robot collision sensor, a robot rotation connector, and the like.

In this embodiment of this application, the server 101 trains a path parameterization model based on sample trajectory data. The path parameterization model is configured for determining trajectory data based on path data of any robot, to parameterize a path of the robot, so that the trajectory data of the robot not only includes coordinates of at least two path points, but also includes timestamps of the at least two path points. The sample trajectory data is obtained from a training object passing through a sample path. In an example in which the training object is a human, because the sample trajectory data is obtained from the human passing through a sample path, the path parameterization model has a human mimic ability, and the obtained trajectory data conforms to a law of motion of humans. A robot path includes a plurality of path points. The path points are key elements for defining the robot path, and are a series of preset position points passed by the robot in a motion process. These preset position points form a motion path of the robot. The path data of the robot path includes coordinates of the path points, and the trajectory data of the robot path includes coordinates of the path points and timestamps of the path points.

Therefore, in a case that a start point and an end point of the end effector 1021 of the robot 102 are already determined, and the end effector 1021 is to be controlled to move from the start point to the end point, the robot controller 1022 determines a path from the start point to the end point, and then determines trajectory data corresponding to the path data by the path parameterization model. It can be ensured that the trajectory data includes features of the training object, and a speed change of the end effector 1021 when passing through the path better conforms to a law of motion of the training object.

The implementation environment shown in FIG. 1 is merely an exemplary implementation environment, and the embodiments of this application may also be applied to other implementation environments.

The embodiments of this application relate to a path parameterization model training method and a method for controlling robot motion via the path parameterization model. The following embodiments first describe the path parameterization model training method, and then describe the method for controlling robot motion.

FIG. 2 is a flowchart of a path parameterization model training method provided in an embodiment of this application. The embodiment of this application is executed by a computer device, and the computer device is a terminal or a server. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. Referring to FIG. 2, the method includes the following operations:

**201: The computer device acquires sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path.**

In this embodiment of this application, the training object is, for example, a human, a robot, or an animal, and is not limited thereto. In an example in which the training object is a human, considering that a motion of the human is related in space and time, and a motion trajectory of the human does not take efficiency as the only goal of motion and is affected by factors such as intentions, emotions, and capabilities of the human, the motion trajectory of the human includes advantageous clues about how to pass through a path. Therefore, to ensure that the trajectory data generated by the trained path parameterization model conforms to the law of motion of the human, the process of passing through the sample path may be demonstrated by the human, and the sample coordinate of each sample path point in the process of the human passing through the sample path and the sample timestamp at which the human reaches each sample path point are recorded. The sample coordinates of the sample path points are coordinates in a 3D coordinate system, and may represent positions and postures of the sample path points in 3D space. For the sample timestamp of any sample path point, the sample timestamp of the sample path point refers to a sample path point instant at which the training object reaches the sample path point in the process of passing through the sample path.

Schematically, calculated from a first instant as a start instant, an instant at which the training object reaches the sample path point is determined as the sample path point instant of the sample path point. In some embodiments, the first instant is the instant at which the training object enters the sample path. For example, the instant at which the training object enters the sample path is 00:00, the instant at which the training object reaches a first sample path point is 00:02 (i.e., the sample timestamp of the first sample path point), and an instant at which the training object reaches a second sample path point is 00:05 (i.e., the sample timestamp of the second sample path point). In some other embodiments, the first instant may also be an instant at which the training object reaches the first sample path point on the sample path; or, the first instant is an instant at which a video corresponding to the sample trajectory data starts to be recorded; etc. A manner for determining the first instant is not limited in this application.

The sample path includes at least two sample path points from the start point to the end point. The at least two sample path points are obtained by sampling the sample path. For example, the distances between every two adjacent sample path points of the at least two sample path points are equal, or the at least two sample path points are obtained by randomly sampling the sample path.

From the perspective of the entire sample path, after the sample coordinates and the sample timestamps of the at least two sample path points are determined, not only is the time when the training object reaches a sample path point determined, but also the speed at which the training object passes through each sample path point in the sample path is determined, thereby determining the characteristic of speed change when the training object passes through the sample path.

In a possible implementation, a demo video is acquired, and the demo video includes pictures of the training object passing through the sample path. For example, in an example in which the training object is a human, the demo video includes pictures in which a human hand passes the sample path, and sample trajectory data is obtained based on the coordinates of the human hand in the pictures in the demo video and the timestamps corresponding to the pictures.

The demo video is a video obtained by photographing the human hand in the process of the human hand passing through the sample path. The human hand in each picture in the video is at a certain position and a certain posture. The coordinates of the human hand may be acquired and each picture has a corresponding timestamp. In an example in which one frame in the video is one picture, at least two frames of pictures in the demo video are sampled to obtain at least two sets of coordinates and timestamps, thereby forming the sample trajectory data using the at least two sets of coordinates and timestamps. For example, data collection is performed in a human demonstration process by using OptiTrack (an optical motion capture system), to obtain the sample trajectory data.

**202: The computer device trains the path parameterization model based on the sample trajectory data, the path parameterization model being configured to determine trajectory data corresponding to the path based on the path.**

The computer device trains the path parameterization model based on the sample trajectory data, so that the path parameterization model has an ability to accurately determine the trajectory data based on the path, namely, an ability to parameterize the path. The path parameterization model is a deep learning network model, a Transformer model (a model based on an attention mechanism), or any other type of model. In some embodiments, the path parameterization model is an implicit neural human mimic timing function (HMTF).

In a possible implementation, an input of the path parameterization model is path data of a robot, and an output is trajectory data of the robot. Compared with the path data, the trajectory data further includes the timestamps of the at least two path points. Then, the computer device forms the sample path data using the sample coordinates of the at least two sample path points in the sample trajectory data, and trains the path parameterization model by using the sample path data as an input of the path parameterization model and using the sample trajectory data as an output of the path parameterization model.

In another possible implementation, the input of the path parameterization model is a coordinate sequence formed by coordinates of at least two path points, and the output is a timestamp sequence formed by timestamps of the at least two path points. Then, the computer device extracts sample coordinates of at least two sample path points from the sample trajectory data to form a sample coordinate sequence, extracts sample timestamps of the at least two sample path points from the sample trajectory data to form a sample timestamp sequence, and trains the path parameterization model by using the sample coordinate sequence as the input of the path parameterization model and using the sample timestamp sequence as the output of the path parameterization model.

In still another possible implementation, the input of the path parameterization model is at least two timestamps, and the output is coordinates of at least two path points. Then, the computer device extracts sample coordinates of at least two sample path points from the sample trajectory data to form a sample coordinate sequence, extracts sample timestamps of the at least two sample path points from the sample trajectory data to form a sample timestamp sequence, and trains the path parameterization model by using the sample timestamp sequence as the input of the path parameterization model and using the sample coordinate sequence as the output of the path parameterization model.

After the path parameterization model is trained, the path parameterization model may be configured for determining the trajectory data corresponding to a path based on the path, and the trajectory data is configured for controlling the robot to move on the corresponding path.

In some embodiments, in an example in which the path is a first path, path data of the first path includes coordinates of at least two first path points in the first path, and first trajectory data includes first timestamps of the at least two first path points. Therefore, in an example in which the training object is a human, training the path parameterization model is equal to modeling a spatial-temporal correlation in a human motion. After the modeling, human mimic temporal features that match a first path of the robot may be generated for the robot motion by using the path parameterization model.

The robot may be any type of robot, the first path is any path of the robot, and the first path includes at least two first path points. The at least two first path points are obtained by sampling the first path. For example, the distances between every two adjacent first path points of the at least two first path points are equal, or the at least two first path points are obtained by randomly sampling the first path. In addition, the first timestamp of the first path point is a timestamp at which the robot reaches the first path point.

In some other embodiments, in an example in which the path is a second path, path data of the second path includes at least two second timestamps, and second trajectory data includes second coordinates corresponding to at least two second path points respectively. Therefore, in an example in which the training object is a human, training the path parameterization model is equal to modeling a spatial correlation in a human motion. After the modeling, human mimic spatial features that match a second path of the robot may be generated for the robot motion by using the path parameterization model.

In another possible implementation, to ensure accuracy of the path parameterization model, the path parameterization model needs to be trained based on a plurality of pieces of sample trajectory data. In this way, it can be ensured that the path parameterization model can learn a law of motion when the training object passes through different paths, to remove the effect of abnormal trajectories, thereby providing higher universality and higher accuracy.

In an example in which the training object is a human, in a process of passing through a sample path, the speed of the human may change, and even change significantly occasionally. Consequently, local fluctuation in acceleration occurs, causing discontinuous jumps. If the acceleration is directly applied to a robot, the robot may seriously vibrate and be damaged. However, the path parameterization model trained based on a plurality of pieces of human-demonstrated sample trajectory data can learn global features of a human demonstration and filter out local fluctuations, so that the path parameterization model generates a human mimic trajectory having a smoother speed change and improves smoothness of the trajectory.

Exemplarily, different operation modalities of humans generate different forms of sample paths and different forms of trajectories. For example, when a human picks up an object, the human hand directly moves to a position of the object, and when the human needs to pour water in a container held in hand into another container, the human hand holds the container, moves to a position of the other container, and then pours the water. In the two cases, the human hand passes through different paths at different speeds. Therefore, by collecting sample trajectory data in a plurality of operation modalities, and training the path parameterization model based on the sample trajectory data in the plurality of operation modalities, diversity of the sample trajectory data can be enhanced, to allow the path parameterization model to generalize different operation modalities, thereby obtaining a path parameterization model with higher generalization by training. Subsequently, for path data in any operation modality, path parameterization may be performed by using the path parameterization model.

Exemplarily, the path parameterization model may also be separately trained for different operation modalities, i.e., sample trajectory data in each operation modality is obtained, and a path parameterization model corresponding to each operation modality is trained based on the sample trajectory data in each operation modality, to improve pertinence of the path parameterization model. Subsequently, when a robot needs to perform an objective operation in any operation modality, path data of the robot is determined, and trajectory data corresponding to the path data is determined by using the path parameterization model corresponding to the operation modality.

Compared with training the path parameterization model corresponding to each operation modality separately, the path parameterization model trained based on the sample trajectory data in the plurality of operation modalities performs multimodal learning, may possibly generate embedded features, and share the embedded features in relatively similar paths, thereby improving learning efficiency and accuracy.

In this embodiment of this application, the sample trajectory data is acquired and the path parameterization model is trained based on the sample trajectory data. The sample trajectory data includes the respective sample coordinates and sample timestamps of the at least two sample path points in the sample path, and the sample timestamps indicate the sample path point instants at which the training object reaches the at least two sample path points respectively in the process of passing through the sample path. Therefore, the sample trajectory data is trajectory data conforming to the law of motion of the training object, and the trained path parameterization model has an ability to generate the trajectory data conforming to the law of motion of the training object. Therefore, by determining trajectory data corresponding to path data of a robot using the path parameterization model, it is ensured that the trajectory data includes features of the training object, better conforms to the law of motion of the training object, and improves the rationality of the trajectory data. When the trajectory data is applied to control the robot to move on the first path, the motion of the robot better conforms to a motion habit of the training object.

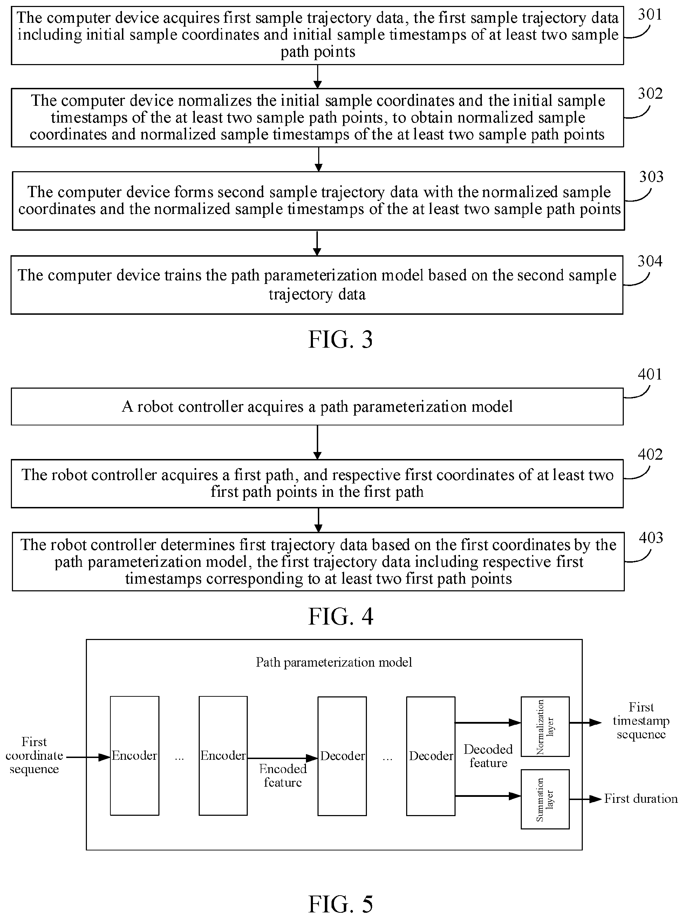

Based on the embodiment shown in FIG. 2, an embodiment of this application further provides another path parameterization model training method. FIG. 3 is a flowchart of another path parameterization model training method provided in an embodiment of this application. The embodiment of this application is executed by a computer device, and the computer device is a terminal or a server. Referring to FIG. 3, the method includes the following operations:

**301: The computer device acquires first sample trajectory data, the first sample trajectory data including initial sample coordinates and initial sample timestamps of at least two sample path points.**

The first sample trajectory data is initial sample trajectory data acquired by the computer device. For example, the first sample trajectory data is trajectory data acquired based on the human demo video in operation 201.

**302: The computer device normalizes the initial sample coordinates and the initial sample timestamps of the at least two sample path points, to obtain normalized sample coordinates and normalized sample timestamps of the at least two sample path points.**

In an example in which the training object is a human, in different demo videos, because the sample coordinates of positions of a human hand are affected by an initial posture of the human hand in the real world, and a sample timestamp corresponding to a picture in the demo video is affected by real time, the first sample trajectory data suffers many interference factors, and cannot accurately reflect a real law of motion of the human in a process of passing through a sample path. Therefore, the first sample trajectory data is normalized to remove interference factors. After processing, the normalized sample coordinates and normalized sample timestamps of the at least two sample path points can be obtained. The normalized sample coordinates only reflect change in position of the human hand in the sample path without considering the effect of the initial posture of the human hand in the real world and the duration of a trajectory. The normalized sample timestamps reflect change of a relative time when the human hand reaches each sample path point in the sample path, thereby reflecting change in speed of the human hand in the sample path without being interfered with by the real time.

In a possible implementation, operation 302 includes: determining a normalized sample coordinate of each sample path point based on an initial sample coordinate of each sample path point and the initial sample coordinate of a starting sample path point of the at least two sample path points; determining a difference between a sample timestamp of each sample path point and the sample timestamp of the starting sample path point as a duration corresponding to each sample path point; and determining a ratio of the duration corresponding to each sample path point to a duration corresponding to the last sample path point in the at least two sample path points, as a normalized sample timestamp of each sample path point. For any sample path point, the duration corresponding to the sample path point refers to a duration from the starting sample path point to the sample path point.

For example, the initial sample coordinates of the at least two sample path points are normalized by using the following formula (1): ${x}_{i}^{\left|h\right|} = {\left({x}_{1}^{h}\right)}^{- 1} {x}_{i}^{h} , i = 1 , 2 … m$ (1)

In formula (1), *i* represents a serial number of a sample path point, *m* represents the number of sample path points, *i* and *m* are positive integers, ${x}_{i}^{h}$ represents the initial sample coordinate of the *i*^{th} sample path point, and ${x}_{i}^{\left|h\right|}$ represents the normalized sample coordinate of the *i*^{th} sample path point. *h* represents before normalization, |*h*| represents after normalization, and *h* may be replaced with any other letter. The initial sample coordinate ${x}_{1}^{h}$ of the starting sample path point is inversely transformed, to obtain an inverse transformation result ${\left({x}_{1}^{h}\right)}^{- 1}$, and the inverse transformation result is multiplied with the initial sample coordinate ${x}_{i}^{h}$ of the *i*^{th} sample path point, to obtain the normalized sample coordinate ${x}_{i}^{\left|h\right|}$ of the *i*^{th} sample path point.

For example, the initial sample timestamps of the at least two sample path points are normalized by using the following formula (2): ${t}_{i}^{\left|h\right|} = \left({t}_{i}^{h}-{t}_{1}^{h}\right) / \left({t}_{m}^{h}-{t}_{1}^{h}\right)$ (2)

In formula (2), ${t}_{i}^{h}$ represents the initial sample timestamp of the *i*^{th} sample path point, and ${t}_{i}^{\left|h\right|}$ represents the normalized sample timestamp of the *i*^{th} sample path point. Then, ${t}_{1}^{\left|h\right|} = 0 , {t}_{m}^{\left|h\right|} = 1$, i.e., a normalized sample timestamp of each sample path point belongs to an interval [0, 1], where the sample timestamp of a start point (the starting sample path point) is 0, and the sample timestamp of an end point (the last sample path point) is 1. ( ${t}_{i}^{h} - {t}_{1}^{h}$) represents a duration from the starting sample path point to the *i*^{th} sample path point, and ( ${t}_{m}^{h} - {t}_{1}^{h}$) represents a duration from the starting sample path point to the last sample path point.

By using formula (1), the product of the initial sample coordinate of each sample path point and the inverse transformation result of the initial sample coordinate of the starting sample path point is calculated, so that an absolute posture of each sample path point can be converted into a posture difference relative to a posture of the starting sample path point. In other words, the posture of each sample path point is transformed relative to the posture of the starting sample path point, and a relative posture description with the starting sample path point as a reference is constructed, thereby achieving consistency between different sample path points and removing the effect of an initial posture of a human hand. In addition, by using formula (2), the duration corresponding to the last sample path point is the duration of the entire trajectory, and the normalized sample timestamp of each sample path point represents a ratio of the sample timestamp when the sample path point is reached to the duration of the trajectory, rather than the real time when the sample path point is reached, so that a relative position of a sample path point in the entire trajectory can be better reflected, and the effect of the real time is removed.

**303: The computer device forms second sample trajectory data with the normalized sample coordinates and the normalized sample timestamps of the at least two sample path points.**

For example, the first sample trajectory data is represented as ${ξ}^{h} = \left\{\left({x}_{1}^{h}, {t}_{1}^{h}\right),\left({x}_{2}^{h}, {t}_{2}^{h}\right),…,\left({x}_{m}^{h}, {t}_{m}^{h}\right)\right\}$, *i* =1, 2*...m*, *ξ^{h}* represents the first sample trajectory data, *i* represents a serial number of a sample path point, m represents the number of sample path points, *i* and *m* are positive integers, ${x}_{i}^{h}$ represents the initial sample coordinate of the *i*^{th} sample path point, ${t}_{i}^{h}$ represents the initial sample timestamp of the *i*^{th} sample path point, ${x}_{i}^{\left|h\right|}$ represents the normalized sample coordinate of the *i*^{th} sample path point, ${t}_{i}^{\left|h\right|}$ represents the normalized sample timestamp of the *i*^{th} sample path point, then, the second sample trajectory data is represented as ${ξ}^{\left|h\right|} = \left\{\left({x}_{1}^{\left|h\right|}, {t}_{1}^{\left|h\right|}\right),\left({x}_{2}^{\left|h\right|}, {t}_{2}^{\left|h\right|}\right),…,\left({x}_{m}^{\left|h\right|}, {t}_{m}^{\left|h\right|}\right)\right\}$, and *ξ*^{|*h*|} represents the second sample trajectory data.

**304: The computer device trains the path parameterization model based on the second sample trajectory data.**

Operation 304 is similar to operation 202, and descriptions thereof are omitted herein.

In addition, in a possible implementation, an input of the path parameterization model is a coordinate sequence formed by coordinates of at least two path points, and an output is a timestamp sequence formed by timestamps of the at least two path points, i.e., the path parameterization model is a sequence-to-sequence neural network model. Then, a process of training the path parameterization model based on the sample trajectory data includes: forming a sample coordinate sequence using sample coordinates of at least two sample path points; forming a first sample timestamp sequence using sample timestamps of the at least two sample path points; and determining, by the path parameterization model, a second sample timestamp sequence corresponding to the sample coordinate sequence. The first sample timestamp sequence is a sample timestamp sequence conforming to a motion law of a human, and the second sample timestamp sequence is a sample timestamp sequence predicted by the path parameterization model. Then, based on an error between the first sample timestamp sequence and the second sample timestamp sequence, model parameters of the path parameterization model are adjusted, thereby improving performance of the path parameterization model, so that the sample timestamp sequence generated by the path parameterization model gradually approaches a sample timestamp sequence conforming to the motion law of a human.

In another possible implementation, if the sample trajectory data is normalized, sample timestamps in the normalized sample timestamp sequence belong to an interval [0, 1], and the sample timestamp sequence can reflect speed change in the sample path, but cannot reflect the real duration for passing through the sample path. Therefore, during training of the path parameterization model, not only does the sample timestamp sequence need to be considered, but also the duration for passing through the sample path needs to be considered.

Therefore, the training the path parameterization model based on the sample trajectory data further includes:
determining a difference between the sample timestamp of the last sample path point and the sample timestamp of the starting sample path point as a first duration; and determining, by the path parameterization model, a second duration corresponding to the second sample timestamp sequence. The first duration is a duration for a human hand to pass through the sample path, and the second duration represents a duration predicted by the path parameterization model for passing through the sample path. Then, the adjusting the model parameters of the path parameterization model based on the error between the first sample timestamp sequence and the second sample timestamp sequence includes: adjusting the model parameters of the path parameterization model, based on an error between the first sample timestamp sequence and the second sample timestamp sequence, and an error between the first duration and the second duration, thereby improving performance of the path parameterization model, so that the sample timestamp sequence generated by the path parameterization model gradually approaches a sample timestamp sequence conforming to the motion law of a human, and the duration required for passing through the path better conforms to the motion law of a human.

In addition, the adjusting the model parameters of the path parameterization model based on the errors includes: creating a loss function, a loss value in the loss function being positively correlated with the errors; and adjusting the model parameters of the path parameterization model based on the errors with an objective that the loss value is close to a minimum value, until the number of times of training reaches an objective number of times or until the loss function converges, to complete training of the path parameterization model.

Exemplarily, the sample timestamp sequence in the first sample trajectory data is ${Γ}^{h} = \left\{{t}_{1}^{h},{t}_{2}^{h},…,{t}_{m}^{h}\right\}$, a first sample timestamp sequence obtained after normalization is ${Γ}^{\left|h\right|} = \left\{{t}_{1}^{\left|h\right|}, {t}_{2}^{\left|h\right|},…, {t}_{m}^{\left|h\right|}\right\}$, the second sample timestamp sequence is ${Γ}^{\left|k\right|} = \left\{{t}_{1}^{\left|k\right|}, {t}_{2}^{\left|k\right|},…, {t}_{m}^{\left|k\right|}\right\}$, and an error between the first sample timestamp sequence *Γ*^{|*h*|} and the second sample timestamp sequence *Γ*^{|*k*|} includes: a first error and a second error.

A distance between a sample timestamp of each sample path point in the first sample timestamp sequence and a sample timestamp of the same sample path point in the second sample timestamp sequence is positively correlated with the first error, i.e., a distance between the sample timestamp of each sample path point in the first sample timestamp sequence and the sample timestamp of each sample path point in the second sample timestamp sequence is positively correlated with the first error. The distance may be a Euclidean distance, an L2 distance, or any other distance between two sample timestamps of the same sample path point. The first error may be the sum of distances between two sample timestamps of each sample path point, or may be the product of distances between two sample timestamps of each sample path point, or may be any other value positively correlated with the distance between two sample timestamps of each sample path point, which is not limited in this embodiment of this application. The distance between two sample timestamps is configured for measuring the difference between a sample timestamp outputted by the path parameterization model and a sample timestamp in the sample trajectory data, or configured for quantizing the deviation degree, in a time dimension, between a robot reaching a specified sample path point and a human hand reaching the same sample path point.

For example, the first error is calculated by the following formula (3): ${{\sum }_{i = 1}^{m} \left‖{t}_{i}^{\left|k\right|}-{t}_{i}^{\left|h\right|}\right‖}_{2}$ (3)

In formula (3), *i* represents a serial number of a sample path point, *m* represents the number of the sample path points, *i* and *m* are positive integers, ${t}_{i}^{\left|h\right|}$ represent a sample timestamp of the *i*^{th} sample path point in the first sample timestamp sequence, ${t}_{i}^{\left|k\right|}$ represents a sample timestamp of the *i*^{th} sample path point in the second sample timestamp sequence, and ∥·∥₂ represents an L2 distance. In addition, *h* and *k* are letters only for distinguishing the first sample timestamp sequence from the second sample timestamp sequence and may be replaced with any other letters.

In addition, a distance between the second duration and the first duration is positively correlated with the second error. The distance may be a Euclidean distance, an L2 distance, or any other distance between the second duration and the first duration. The second error may be equal to the distance between the second duration and the first duration, or may be the product of the distance between the second duration and the first duration and a preset value, or may be any other value positively correlated with the distance between the second duration and the first duration, which is not limited in this embodiment of this application. The distance between two durations is configured for measuring the difference between a duration predicted by the path parameterization model for passing through the sample path and that for a human hand to pass through the sample path.

For example, the second error is calculated by the following formula (4): ${\left‖T-{T}^{h}\right‖}_{2}$ (4)

In formula (4), *T* represents the second duration, and *T^{h}* represents the first duration, ${T}^{h} = {t}_{m}^{h} - {t}_{1}^{h}$, namely a duration from the starting sample path point to the last sample path point.

An error between the first sample timestamp sequence *Γ*^{|*h*|} and the second sample timestamp sequence *Γ*^{|*k*|} includes a first error and a second error, including: the error between the first sample timestamp sequence *Γ*^{|*h*|} and the second sample timestamp sequence *Γ*^{|*k*|} is the sum of the first error and the second error, or the product of the sum of the first error and the second error and a preset value, or a weighted sum of the first error and the second error, which is not limited in this embodiment of this application.

In a possible implementation, a loss function for path parameterization is *L* = *ω*₁*L*₁ + *ω*₂*L*₂, *L* represents a loss value, *L*₁ represents the first error, *L*₂ represents the second error, *ω*₁ represents a first weight, and *ω*₂ represents a second weight, where the first weight and the second weight may be set by the computer device, and the loss value is the weighted sum of the first error and the second error.

In addition, besides the first error and the second error, the error of the path parameterization model may further include other errors, which is not limited in this embodiment of this application.

After the path parameterization model is trained, trajectory data corresponding to the path data of the robot may be determined by the path parameterization model.

In this embodiment of this application, in addition to considering that the robot is required to move safely and reasonably, it is more important that the robot is enabled to operate in a manner that can be accepted, understood, or even predicted by humans. In this embodiment of this application, the sample trajectory data is acquired and the path parameterization model is trained based on the sample trajectory data. The sample trajectory data includes the sample coordinates of the at least two sample path points in the sample path and the sample timestamp at which the training object reaches each sample path point in the process of passing through the sample path. Therefore, the sample trajectory data is trajectory data conforming to the law of motion of the training object, and the trained path parameterization model has an ability to generate the trajectory data conforming to the law of motion of the training object. Therefore, when the training object is a human, the trajectory data generated by the path parameterization model includes human mimic temporal features with smooth speed changes, better conforms to the law of motion of humans, and improves the rationality of the trajectory data. Compared with the TOPP method, the path parameterization model provided in this embodiment of this application is more universal and significantly improves the human mimic ability.

In addition, the initial sample coordinates and sample timestamps of the at least two sample path points in the first sample trajectory data are normalized respectively, and the path parameterization model is trained based on the second sample trajectory data obtained after the normalization. The normalized sample coordinates reflect change in position and posture of the human hand in the sample path without considering the effect of the initial posture of the human hand in the real world and the duration of a trajectory. The normalized sample timestamps reflect change of a relative time when the human hand reaches each sample path point in the sample path, thereby reflecting change in speed of the human hand in the sample path without being interfered with by the real time, thereby ensuring that the path parameterization model can accurately learn the motion law of a human, and improving accuracy of the path parameterization model.

In addition, a demo video is acquired in a human demonstration process, and sample trajectory data that accurately reflects the motion law of a human can be acquired based on coordinates of a human hand in a picture in the demo video and a timestamp corresponding to the picture, thereby improving the accuracy of the path parameterization model.

In addition, the input of the path parameterization model is a coordinate sequence formed by coordinates of at least two path points, and the output is a timestamp sequence formed by timestamps of the at least two path points. The first sample timestamp sequence determined based on the sample trajectory data is a sample timestamp sequence conforming to the motion law of a human, and the second sample timestamp sequence outputted by the path parameterization model is a sample timestamp sequence predicted by the path parameterization model. Then, based on an error between the first sample timestamp sequence and the second sample timestamp sequence, model parameters of the path parameterization model are adjusted, thereby improving performance of the path parameterization model, so that the timestamp sequence generated by the path parameterization model gradually approaches a timestamp sequence conforming to the motion law of a human, and the accuracy of the path parameterization model is improved.

In addition, if the sample trajectory data is normalized, the normalized sample timestamp sequence can reflect speed change in the sample path, but cannot reflect the real duration for passing through the sample path. Therefore, the path parameterization model is trained based on the sample timestamp sequence and the duration of the sample path, so that the timestamp sequence generated by the path parameterization model gradually approaches the timestamp sequence conforming to the motion law of a human, the duration required for passing through the path better conforms to the motion law of a human, and the accuracy of the path parameterization model is improved.

Based on the embodiments shown in FIG. 2 and FIG. 3, an embodiment of this application further provides a method for controlling robot motion, and describes a process of determining trajectory data by a path parameterization model. FIG. 4 is a flowchart of a method for controlling robot motion provided in an embodiment of this application. This embodiment of this application uses a robot controller as an example for performing the method. Referring to FIG. 4, the method includes the following operations:

**401: The robot controller acquires a path parameterization model.**

The path parameterization model is trained based on sample trajectory data, the sample trajectory data includes coordinates and timestamps of at least two path points in a sample path, and the timestamps are timestamps at which a human reaches the path points when passing through the sample path. A training process of the path parameterization model is the same as that of the embodiments shown in FIG. 2 and FIG. 3, and descriptions thereof are omitted herein.

In a possible implementation, after training the path parameterization model, a computer device sends the path parameterization model to the robot controller, and the robot controller may store the path parameterization model. Then, each time path data of a robot is determined by path planning, the robot controller may determine trajectory data corresponding to the path data by the path parameterization model.

**402: The robot controller acquires a first path, and respective first coordinates of at least two first path points in the first path.**

The first path represents a path that the robot needs to pass through, the first path includes at least two first path points, the first one of the at least two first path points is a start point of the robot, and the last one of the at least two first path points is an end point of the robot.

In a possible implementation, the robot controller determines the start point and the end point, determines a path pointing from the start point to the end point based on the start point and the end point of the robot, and performs smoothing on the path to obtain a first path satisfying a smoothing condition. For example, the robot controller uses a rapidly-exploring random tree (RRT) algorithm, an RRT-Connect algorithm, or the like, to plan a path based on the start point and the end point of the robot, to determine the path from the start point to the end point.

In a possible implementation, the robot controller uses Cartesian space, and the coordinates involved are coordinates in a Cartesian space coordinate system of the robot. Or, the robot controller may use other coordinate systems, which is not limited in this embodiment of this application. For example, the robot controller creates Cartesian space and joint space, performs path parameterization in the Cartesian space, determines first trajectory data corresponding to the first path, and then may convert the first trajectory data into trajectory data in the joint space. Or, the robot controller creates Cartesian space and joint space, and converts the first path in the joint space into the first path in the Cartesian space, thereby performing path parameterization in the Cartesian space.

**403: The robot controller determines first trajectory data based on the first coordinates by the path parameterization model, the first trajectory data including respective first timestamps corresponding to at least two first path points.**

The first trajectory data represents a first trajectory of the robot, and the first trajectory data is configured for controlling the robot to move on the first path, so that the robot reaches the at least two first path points respectively at first path point instants indicated by the first timestamps. The first path is considered as a geometrical object not including a temporal feature, and the first trajectory includes a temporal feature. For example, the first path of the robot is represented as *P* = {*x*₁,*x*₂,...,*xₘ*), *m* represents the number of path points, *m* is a positive integer, and the first trajectory is represented as *ξ* = {(*x*₁ ,*t*₁),(*x*₂,*t*₂),..., (*xₘ*, *tₘ*)}. Path parameterization means adding a timestamp and a first duration of a trajectory based on the first path to obtain the first trajectory, so that the robot moves according to the first trajectory.

Exemplarily, in addition to the first timestamps of the at least two first path points, the first trajectory data may also include the first coordinates of the at least two first path points, so that the change in position and posture and the change in speed of the robot in the process of passing through the first path may be represented based on the first trajectory data.

In a possible implementation, the input of the path parameterization model is a coordinate sequence formed by coordinates of at least two path points, and the output is a timestamp sequence formed by timestamps of the at least two path points. Then, a first coordinate sequence is determined based on the first coordinates of the at least two first path points, and a first timestamp sequence and a first duration corresponding to the first coordinate sequence are determined by the path parameterization model, the first duration representing a duration for the robot to pass through the first path.

In a possible implementation, in a case that the sample coordinates of the at least two sample path points in the sample trajectory data are not normalized in the process of training the path parameterization model, the determining the first coordinate sequence based on the first coordinates of the at least two first path points includes: forming the first coordinate sequence using the first coordinates of the at least two first path points.

In another possible implementation, in a case that the sample coordinates of the at least two sample path points in the sample trajectory data are normalized in the process of training the path parameterization model, the determining the first coordinate sequence based on the coordinates of the at least two first path points includes: forming an initial coordinate sequence using the first coordinates of the at least two first path points, and then normalize the at least two first coordinates in the initial coordinate sequence, to obtain the first coordinate sequence. A normalization process is the same as that in operation 302, and descriptions thereof are omitted herein.

In addition, if the sample trajectory data is normalized in the process of training the path parameterization model, the trained path parameterization model has an ability to generate a normalized timestamp sequence. Namely, in the generated timestamp sequence, the timestamp of the first one of the first path points is 0, and the timestamp of the last one of the first path points is 1. Although the first timestamp sequence can reflect speed change of the robot, the first timestamp sequence cannot reflect an accurate time when the robot reaches each first path point. Therefore, after the first timestamp sequence and the first duration corresponding to the first coordinate sequence are determined by the path parameterization model, the product of each timestamp in the first timestamp sequence and the first duration is calculated, to obtain an updated first timestamp sequence. The timestamps of at least two first path points included in the updated first timestamp sequence represent an interval duration between the first path points, i.e., an interval duration between a time point when reaching each first path point and the start time point. Subsequently, the robot may be controlled, according to the updated first timestamp sequence, from the start point to reach each first path point after the interval duration of each first path point.

In a possible implementation, after obtaining the first trajectory data by the path parameterization model, the robot controller may use the first trajectory data as final trajectory data of the robot. Or, the robot is further provided with a constraint condition, and the trajectory data of the robot needs to satisfy the constraint condition. The constraint condition includes a limiting condition for the speed of the robot, a limiting condition for the speed or torque of a joint of the robot, or the like. After determining the first timestamp sequence and the first duration, the robot controller determines whether the first timestamp sequence and the first duration satisfy the constraint condition. If the constraint condition is satisfied, the robot is controlled based on the first timestamp sequence and the first duration. If the constraint condition is not satisfied, the first timestamp sequence and the first duration are adjusted until the adjusted first timestamp sequence and first duration satisfy the constraint condition, and the robot is controlled based on the adjusted first timestamp sequence and first duration.

For example, *T*' ← *T* + *Δt* represent adding an adjustment range *Δt* to the original first duration *T*, to obtain the updated first duration *T*', and *Γ*'←*T*'×*Γ* represents multiplying the original first timestamp sequence *Γ* by the updated first duration *T*', to obtain the updated first timestamp sequence *Γ*'.

In this embodiment of this application, path parameterization performed by the robot controller is used as an example. In another embodiment, path parameterization may be performed by a computer device for the robot, i.e., the robot controller determines a path of the robot, and then sends the path to the computer device. The computer device obtains trajectory data of the path by using a path parameterization model, and then sends the trajectory data to the robot controller. The robot controller controls the robot to move according to the trajectory data, so that the law of motion of the robot conforms to the law of motion of a training object.

The method for controlling robot motion provided in this embodiment of this application may be applied to motion planning for a bionic robot or a non-bionic robot. The bionic robot is a robot whose appearance is similar to that of a human, and the non-bionic robot is a robot whose appearance is not similar to that of a human. In addition, the method for controlling robot motion provided in this embodiment of this application may be applied to an optimization-based path planning algorithm. An objective function is set in the optimization-based path planning algorithm (a first function or any other way of naming may be used, which is not limited). The objective function represents an optimization objective, and during path planning, a trajectory with the smallest value of the objective function needs to be determined, i.e., a trajectory that can achieve the optimization objective. Then, after trajectory data is determined by the method provided in this embodiment of this application, the value of the objective function may be determined based on the trajectory data, so as to select the trajectory data with the smallest value of the objective function.

For example, the first trajectory data satisfies the following conditions: $ξ * = arg {min}_{ξεΞ} u \left(ξ\right) ;$ $s . t . \left\{\begin{matrix}ξ \left({t}_{i}\right) = {x}_{i} {t}_{i} ϵ Γ , {x}_{i} ϵ P \left(i=1,2,…,m\right) \\ {C}_{OTHERCONSTRAINTS}\end{matrix}\right. ;$

where *u*(*ξ*) represents an objective function, the objective function is optimization costs of the robot, for example, a first duration for passing through the first trajectory or energy for passing through the first trajectory, *Ξ* represents a space to which the first trajectory data belongs, and *ξ*^{*} represents first trajectory data satisfying the smallest value of the objective function. *i* represents a serial number of a path point, *m* represents the number of path points, *i* and *m* are positive integers, *xᵢ* represents the coordinate of the *i*^{th} path point, *tᵢ* represents the timestamp of the i ^{th} path point, *Γ* = {*t*₁ , *t*₂,...,*tₘ*}, *Γ* represents the first timestamp sequence, *P =* {*x*₁,*x*₂,...,*xₘ*}, *P* represents the first coordinate sequence, and *C_{OTHERCONSTRAINTS}* represents the constraint condition that the robot needs to satisfy.

In the embodiments of this application, the path parameterization model is trained based on the sample trajectory data. The sample trajectory data includes the respective sample coordinates and sample timestamps of the at least two sample path points in the sample path, and the sample timestamps indicate the sample path point instants at which the training object reaches the at least two sample path points respectively in the process of passing through the sample path. Therefore, the sample trajectory data is trajectory data conforming to the law of motion of the training object, and the trained path parameterization model has an ability to generate the trajectory data conforming to the law of motion of the training object. Therefore, by determining trajectory data corresponding to path data of a robot using the path parameterization model, it is ensured that the trajectory data includes features of the training object, better conforms to the law of motion of the training object, and improves the rationality of the trajectory data. When the trajectory data is applied to control the robot to move on the path, the motion of the robot better conforms to a motion habit of the training object.

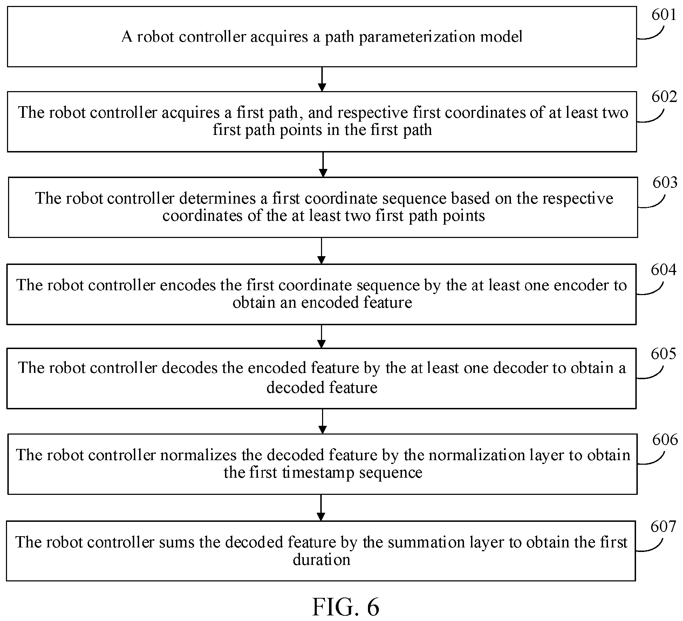

Based on the embodiment shown in FIG. 4, an embodiment of this application further provides another method for controlling robot motion. FIG. 5 is a schematic structural diagram of a path parameterization model provided in an embodiment of this application. The path parameterization model includes at least one encoder, at least one decoder, a normalization layer, and a summation layer. FIG. 6 is a flowchart of another method for controlling robot motion provided in an embodiment of this application. This embodiment of this application uses a robot controller as an example for performing the method. Referring to FIG. 6, the method includes the following operations:
**601: The robot controller acquires a path parameterization model.**
**602: The robot controller acquires a first path, and respective first coordinates of at least two first path points in the first path.**

Operations 601 and 602 are similar to operations 401 and 402, and descriptions thereof are omitted herein.

**603: The robot controller determines a first coordinate sequence based on the respective coordinates of the at least two first path points.**

Operation 603 is similar to a possible implementation of determining the first coordinate sequence in operation 403, and descriptions thereof are omitted herein.

**604: The robot controller encodes the first coordinate sequence by the at least one encoder to obtain an encoded feature.**

**605: The robot controller decodes the encoded feature by the at least one decoder to obtain a decoded feature.**

**606: The robot controller normalizes the decoded feature by the normalization layer to obtain the first timestamp sequence.**

After the decoded feature is normalized by the normalization layer, the obtained first timestamp sequence is a normalized timestamp sequence, i.e., the first timestamp sequence includes the normalized first timestamps of the at least two first path points. For example, when the first timestamp of the first one of the first path points is 0, at t=0, the robot needs to start from the first one of the first path points (namely, a start point), and when the first timestamp of the last one of the first path points is 1, the ratio of a duration for the robot to reach the last one of the first path points to a total first duration is 1.

**607: The robot controller sums the decoded feature by the summation layer to obtain the first duration.**

The decoded feature includes multiple features, for example, decoded features corresponding to the at least two first path points. Then, the multiple features are summed by the summation layer to obtain the first duration.

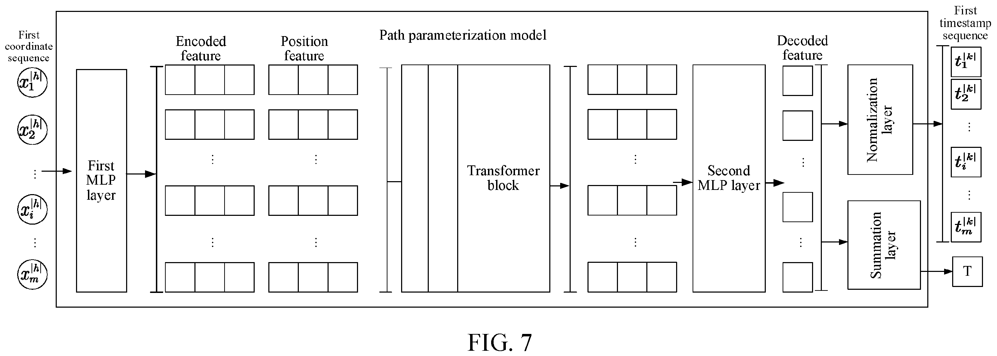

For example, referring to FIG. 7, the at least one encoder includes a multilayer perceptron (MLP) layer, and the at least one decoder includes a plurality of transformer blocks (networks based on an attention mechanism) and an MLP layer. The first coordinate sequence is ${P}^{\left|h\right|} = \left\{{x}_{1}^{\left|h\right|},{x}_{2}^{\left|h\right|},…,{x}_{m}^{\left|h\right|}\right\}$, *i* represents a serial number of a path point, *m* represents the number of path points, *i* and *m* are positive integers, and ${x}_{i}^{\left|h\right|}$ represents the coordinate of the *i*^{th} path point. A first coordinate sequence is encoded by the first MLP layer to obtain an encoded feature. The encoded feature includes encoded sub-features corresponding to each path point. Then, location sub-features corresponding to each path point are determined based on the locations, in the encoded feature, of the encoded sub-features corresponding to each path point. A location feature is formed using the location sub-features corresponding to the at least two path points. Then, the encoded feature and the location feature are inputted into the first transformer block, so that the encoded feature is decoded based on the location feature by the plurality of transformer blocks and a second MLP layer, to obtain the decoded feature. Then, the decoded feature is processed by the normalization layer and the summation layer respectively, to obtain the first timestamp sequence ${Γ}^{\left|k\right|} = \left\{{t}_{1}^{\left|k\right|}, {t}_{2}^{\left|k\right|},…, {t}_{m}^{\left|k\right|}\right\}$ and the first duration *T*.

Exemplarily, the normalization layer outputs a time difference between every two adjacent first path points. Because the timestamp of the first one of the first path points is 0, starting from the second one of the first path points, the sum of the time difference corresponding to each first path point and the timestamp of a first path point before each first path point is calculated, to obtain the timestamp of each first path point, thereby ensuring that the timestamps are monotonically increasing.

In the embodiments of this application, the path parameterization model is trained based on the sample trajectory data. The sample trajectory data includes the respective sample coordinates and sample timestamps of the at least two sample path points in the sample path, and the sample timestamps indicate the sample path point instants at which the training object reaches the at least two sample path points respectively in the process of passing through the sample path. Therefore, the sample trajectory data is trajectory data conforming to the law of motion of the training object, and the trained path parameterization model has an ability to generate the trajectory data conforming to the law of motion of the training object. Therefore, by determining trajectory data corresponding to path data of a robot using the path parameterization model, it is ensured that the trajectory data includes features of the training object, better conforms to the law of motion of the training object, and improves the rationality of the trajectory data. When the trajectory data is applied to control the robot to move on the path, the motion of the robot better conforms to a motion habit of the training object.

In addition, an embodiment of this application provides a model architecture of a path parameterization model. The path parameterization model includes at least one encoder, at least one decoder, a normalization layer, and a summation layer. This model architecture can improve the learning efficiency of the path parameterization model, thereby improving the accuracy of the path parameterization model.

In addition, based on the foregoing description, in some embodiments, in an example in which the path is a second path, path data of the second path includes at least two second timestamps, and second trajectory data includes second coordinates corresponding to at least two second path points respectively. Therefore, in an example in which the training object is a human, training the path parameterization model is equal to modeling a spatial correlation in a human motion. After the modeling, human mimic spatial features that match a second path may be generated for the robot motion by using the path parameterization model.

Based on the above, an embodiment of this application further provides another method for controlling robot motion, performed by a computer device, and the method includes: acquiring a path parameterization model, the path parameterization model being trained on sample trajectory data, the sample trajectory data including respective sample coordinates and sample timestamps of at least two sample path points in a sample path, and the sample timestamps indicating sample path point instants at which a training object reaches the at least two sample path points respectively when passing through the sample path; acquiring a second path, and acquiring at least two second timestamps; determining, by the path parameterization model, second trajectory data based on the second timestamps, the second trajectory data including second coordinates corresponding to the at least two second path points respectively, and the second trajectory data being configured for controlling a robot to move on the second path, so that the robot reaches the at least two second path points respectively at second path point instants indicated by the second timestamps.

In some embodiments, the determining, by the path parameterization model, the second trajectory data based on the second timestamps includes: determining a second timestamp sequence and a second duration based on the at least two second timestamps, the second duration representing a duration for the robot to pass through the second path; and determining, by the path parameterization model, a second coordinate sequence corresponding to the second timestamp sequence and the second duration, the second coordinate sequence including second coordinates corresponding to the at least two second path points respectively.

By the method, the sample trajectory data includes the respective sample coordinates and sample timestamps of the at least two sample path points in the sample path, and the sample timestamps indicate the sample path point instants at which the training object reaches the at least two sample path points respectively in the process of passing through the sample path. Therefore, the sample trajectory data is trajectory data conforming to the law of motion of the training object, and the trained path parameterization model has an ability to generate the trajectory data conforming to the law of motion of the training object. Therefore, by determining trajectory data corresponding to path data of a robot using the path parameterization model, it is ensured that the trajectory data includes features of the training object, better conforms to the law of motion of the training object, and improves the rationality of the trajectory data. When the trajectory data is applied to control the robot to move on the path, the motion of the robot better conforms to a motion habit of the training object.

The TOPP method and the method for controlling robot motion provided in this embodiment of this application are compared as follows.

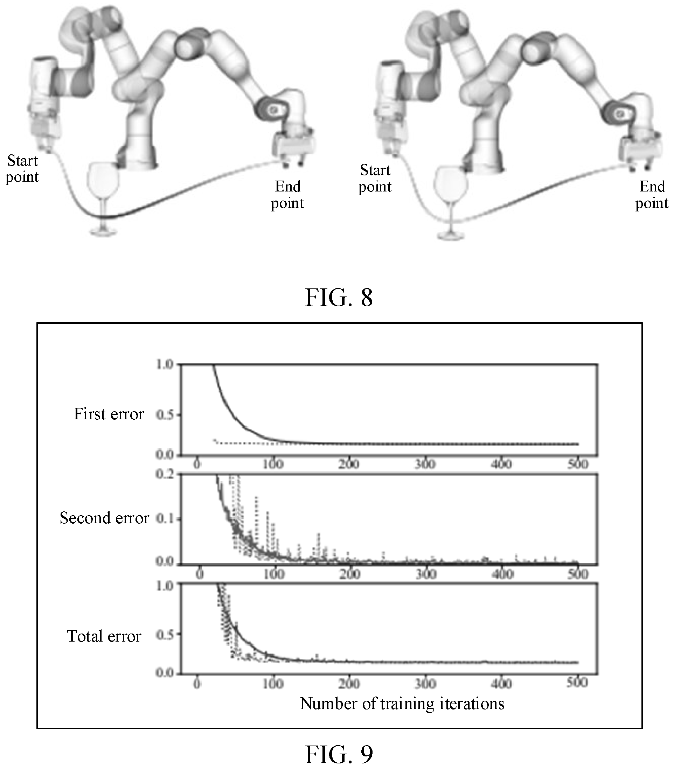

In an exemplary scenario in which an end effector of a robot needs to move from a start point to an end point and bypassing an obstacle between the start point and the end point, a trajectory determined by the TOPP method is shown in a first figure in FIG. 8, and a trajectory determined by the method for controlling robot motion provided in this embodiment of this application is shown in a second figure in FIG. 8. A more transparent trajectory curve indicates a lower speed of the end effector of the robot, and a less transparent trajectory curve indicates a higher speed of the end effector of the robot.

From FIG. 8, the TOPP method drives the robot to move with the maximum ability, so as to pursue the minimum duration. Therefore, the speed of the end effector of the robot first increases and then decreases, and the speed of the end effector is the maximum at a location close to the obstacle, which violates the motion law of a human. However, the method for controlling robot motion provided in this embodiment of this application exhibits a space-related temporal feature. Therefore, the speed of the end effector of the robot increases first, decreases before approaching the obstacle, increases after bypassing the obstacle, and then decreases before reaching the end point. The speed change of the end effector conforms to the motion law of a human, because when bypassing an obstacle, humans may decelerate when approaching the obstacle for the purposes of avoiding the obstacle and protecting the obstacle from being touched, and accelerate after bypassing the obstacle. It can be learned that the trajectory of the robot determined in this embodiment of this application not only completes a movement task from the start point to the end point, but also includes a human mimic temporal feature, thereby conveying richer semantics, expressing an intention of humans to avoid touching the obstacle, and being more expressive.

Experiments are further performed in this embodiment of this application, and the following four operation modalities are demonstrated by humans:
Operation modality 1: A human picks up an object.
Operation modality 2: A human puts down an object.
Operation modality 3: A human holds a container filled with water and moves.
Operation modality 4: A human holds a container filled with water and moves, and then pours the water into another container.

The foregoing four operation modalities include hand reaching actions performed by a human while avoiding a collision, and in different operation modalities, the geometric shape of a path passed by a human hand and the corresponding time characteristics change greatly. For example, the operation modality 3 does not involve a change in the direction of the container, while in the operation modality 4, the direction of the handheld container needs to be re-determined.

In a human demonstration process of the foregoing four operation modalities, data is captured by using OptiTrack (a motion capture system), to construct a data set. Considering that a path actually demonstrated by a human includes sparse and uneven path points, in this embodiment of this application, random sampling is performed on each trajectory demonstrated by the human, to ensure *m*~*u*[40,120], *l*~*u*[30,50], *u* represents even distribution, the number *m* of path points in the sample trajectory data obeys even distribution in an interval of [40, 120], and the quantity *l* of sample trajectory data obeys even distribution in an interval of [30, 50], to ensure even distribution of the path points in the data set.

In a possible implementation, the data set is divided into three subsets: a training set, a verification set, and a test set. For example, the proportions of the quantity of sample trajectory data in the training set, the verification set, and the test set are fixed. For example, the training set includes 70% of sample trajectory data, the verification set includes 20% of sample trajectory data, and the test set includes 10% of sample trajectory data. The path parameterization model is trained via the training set, the trained path parameterization is verified via the verification set, and the path parameterization model is trained again according to the verification result. After training of the path parameterization model is completed, the path parameterization model is evaluated via the test set, to learn the performance of the path parameterization model.

FIG. 9 is a schematic diagram of a learning curve of a path parameterization model provided in an embodiment of this application. Referring to FIG. 9, a horizontal axis of the learning curve represents the number of times of iterative training, a vertical axis represents an error, a solid line represents a training curve, and a dashed line represents a verification curve. As the number of times of iterative training increases, a first error *L*₁, a second error *L*₂, and a total error *L* = *ω*₁*L*₁ + *ω*₂*L*₂ of the path parameterization model are reduced to a very low level. The path parameterization model already achieves a very high prediction accuracy, proving that a human motion is a spatial-temporal correlated motion. The method used in this embodiment of this application can extract a spatial-temporal correlation from operations demonstrated by the human, and extract an accurate temporal feature from a path, thereby constructing an accurate path parameterization model.

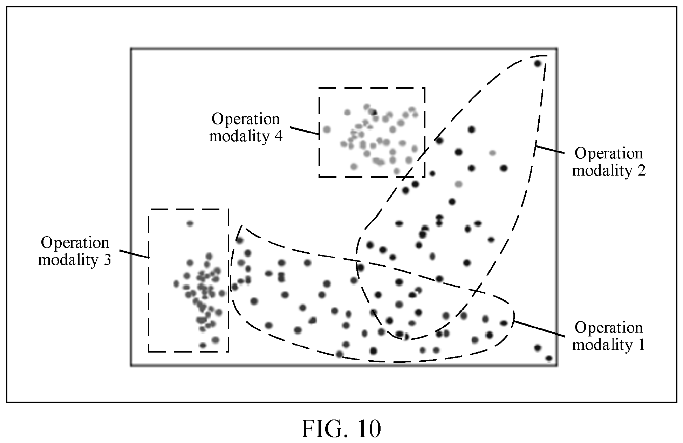

In this embodiment of this application, a principal components analysis (PCA) technology is further used for projecting an embedded feature of each path into a two-dimensional space, to obtain a schematic diagram of embedded features shown in FIG. 10. Each point in FIG. 10 represents an embedded feature of one path, and the embedded feature refers to a feature obtained by the path parameterization model processing path data. For example, a model architecture of the path parameterization model is shown in FIG. 7, and the transformer block includes an encoding layer and a decoding layer. When the transformer block processes a feature, the embedded feature is first obtained through encoding, and then the embedded feature is decoded. Therefore, the embedded feature generated during processing by the transformer block is projected into the two-dimensional space. From FIG. 10, the embedded features of paths corresponding to the foregoing four operation modalities gather in four clusters (indicated by dashed lines) respectively. The embedded features from the same operation modality have a relatively short distance therebetween, and may form one cluster, which proves that the embedded features learned by the path parameterization model are oriented to an operation modality, so that the path parameterization model has high generalization ability and flexibility, and may perform parameterization on random paths from different modalities.

In addition, the TOPP method in the related technology include three types: iterative parabolic time parameterization (IPTP), iterative spline time parameterization (ISTP), and time-optimal trajectory generation (TOTG, with bounded accelerations and speeds). The method provided in this embodiment of this application is compared with the foregoing three TOPP methods as follows:

Given a trajectory ${\left\{{x}_{i}^{h}, {t}_{i}^{k}\right\}}_{i = 1}^{m}$ demonstrated by a human, the method provided in this embodiment of this application (the HMTF method) and the foregoing three TOPP methods are used to perform path parameterization to obtain a new trajectory ${\left\{{x}_{i}^{h}, {t}_{i}^{k}\right\}}_{i = 1}^{m}$, and the following two evaluation indicators are used:

First indicator: ${f}_{timestamp} = \frac{1}{m} {\sum }_{i = 1}^{m} {t}_{i}^{\left|k\right|} / {t}_{i}^{\left|h\right|}$, where *i* represents a serial number of a path point in a trajectory, with an initial value of 1, and a maximum value of *m*, *m* represents the number of path points included in the trajectory, *i* and *m* are positive integers, ${t}_{i}^{\left|k\right|}$ represents the timestamp of the *i*^{th} path point in a trajectory generated by the HMTF method or each of the foregoing three TOPP methods, and ${t}_{i}^{\left|h\right|}$ represents the timestamp of the *i* ^{th} path point in the trajectory demonstrated by the human. *fₜᵢₘₑₛₜₐₘₚ* represents a first indicator, which quantizes a temporal similarity between a trajectory obtained after path parameterization is performed again and a trajectory demonstrated by the human.

Second indicator: *f_{duration}* = *T^{k}*/*T^{h}*, where *T^{k}* represents the duration of the trajectory determined by the HMTF method or each of the foregoing three TOPP methods, and *T^{h}* represents the duration of the trajectory demonstrated by the human. *f_{duration}* represents a second indicator, which quantizes a similarity between the duration of the trajectory obtained after path parameterization is performed again and the duration of the trajectory demonstrated by the human.

Based on the data sets in the foregoing four operation modalities, path parameterization is performed by using the HMTF method and the three TOPP methods respectively, and two evaluation indicators for each method are obtained. The evaluation results are shown in Table 1, where the values in front of the brackets represent average values of *fₜᵢₘₑₛₜₐₘₚ* or *f_{duration}*, and the values in the brackets represent standard deviations of *fₜᵢₘₑₛₜₐₘₚ* or *f_{duration}*.

**Table 1**

| Method | Operation modality 1 | | Operation modality 2 | | Operation modality 3 | | Operation modality 4 | |
|---|---|---|---|---|---|---|---|---|
| | *fₜᵢₘₑₛₜₐₘₚ* | *f_{duration}* | *fₜᵢₘₑₛₜₐₘₚ* | *f_{duration}* | *fₜᵢₘₑₛₜₐₘₚ* | *f_{duration}* | *fₜᵢₘₑₛₜₐₘₚ* | *f_{duration}* |
| IPTP | 5.2e-1 (2.1e-1) | 7.2e-1 (9.1e-2) | 4.3e-1 (1.7e-1) | 6.7e-1 (1.4e-1) | 2.9e-1 (3.2e-1) | 5.3e-1 (1.4e-1) | 5.9e-1 (1.1e-1) | 7.1e-1 (9.3e-2) |
| ISTP | 6.2e-1 (1.5e-1) | 6.9e-1 (7.1e-2) | 3.2e-1 (2.3e-1) | 7.2e-1 (1.5e-1) | 3.2e-1 (1.5e-1) | 7.0e-1 (1.5e-1) | 2.5e-1 (3.7e-1) | 8.0e-1 (2.7e-1) |
| TOTG | 4.9e-1 (1.5e-1) | 6.1e-1 (1.1e-1) | 4.9e-1 (1.9e-1) | 5.9e-1 (2.5e-1) | 2.2e-1 (4.1e-1) | 4.9e-1 (1.3e-1) | 5.7e-1 (9.1e-2) | 6.7e-1 (1.0e-1) |
| HMTF | 9.4e-1 (4.9e-2) | 9.5e-1 (7.0e-2) | 9.2e-1 (3.1e-2) | 9.2e-1 (5.0e-2) | 8.6e-1 (6.1e-2) | 9.1e-1 (2.9e-2) | 9.0e-1 (6.9e-2) | 9.3e-1 (4.9e-2) |

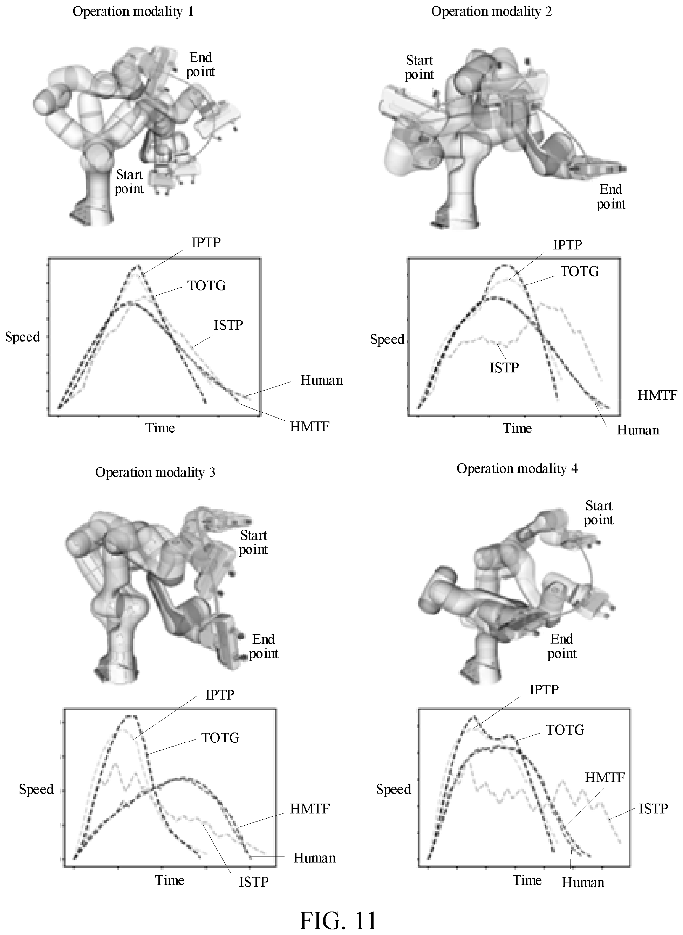

From Table 1, although path parameterization is performed again by all the methods in a case that a system constraint condition is satisfied, the HMTF method achieves higher improvement in terms of a temporal human mimic ability of the obtained trajectory. FIG. 11 shows speed curves of trajectories obtained by using the foregoing four methods in the four operation modalities for a given path (the HMTF method processes both a translational motion and a rotational motion, and for simplicity, FIG. 11 only shows a curve of translational speed). From FIG. 11, local fluctuation in acceleration may occur in a motion process of a human, causing discontinuous jumps. If the acceleration is directly applied to a robot, the robot may seriously vibrate and be damaged. An experiment proves that the HMTF method learns global features of humans and filters out local fluctuations. Therefore, a speed curve is smoother, indicating a smoother speed change in a generated trajectory, and proving that the HMTF method improves smoothness of a trajectory. However, most of the TOPP methods generate a trajectory that is faster but not human mimic. Specifically, because the TOPP methods always drive a robot to pass through a path with the maximum ability, speed distribution on all trajectories in different operation modalities is similar, for example, a speed curve forms a bell-shaped or inverted V-shaped curve at the maximum speed of the robot. In comparison, speed distribution of a trajectory obtained by using the HMTF method exhibits different temporal features for different operation modalities. For example, in the operation modality 1, a human may accelerate first and then decelerate at a relatively low acceleration when the human is about to grasp an object, to stabilize a required grasping posture. In comparison, in the operation modality 4, when being close to a container to be filled with water, a human may decelerate at a high acceleration to avoid water leakage during pouring. The HMTF method uses a spatial-temporal correlation in human manipulated trajectories to successfully parametrize a path of a robot to a trajectory having a human mimic temporal feature, without the need for a clear prompt of a task. In addition, research results indicate that humans usually move in a relatively slow and stable manner. The TOPP methods emphasize only a time-optimal mode, and may mislead motion planning of a robot.

The experiment proves that the trajectory of a robot planned by the TOPP methods is different from a motion trajectory of a human, and is more suitable for a scenario in which operation efficiency is emphasized. However, motion trajectories of humans are temporally and spatially correlated and expressive. By modeling for the spatial-temporal correlation of humans, the trained path parameterization model learns a potential human mimic temporal feature when oriented to a motion task, is significantly improved in aspects of human mimic ability and smoothness, and achieves proper, high-quality, and human mimic path parameterization. The path parameterization model can also summarize motion trajectories in different operation modalities, is flexible enough, and can be applied to motion planning for multiple operation modalities.

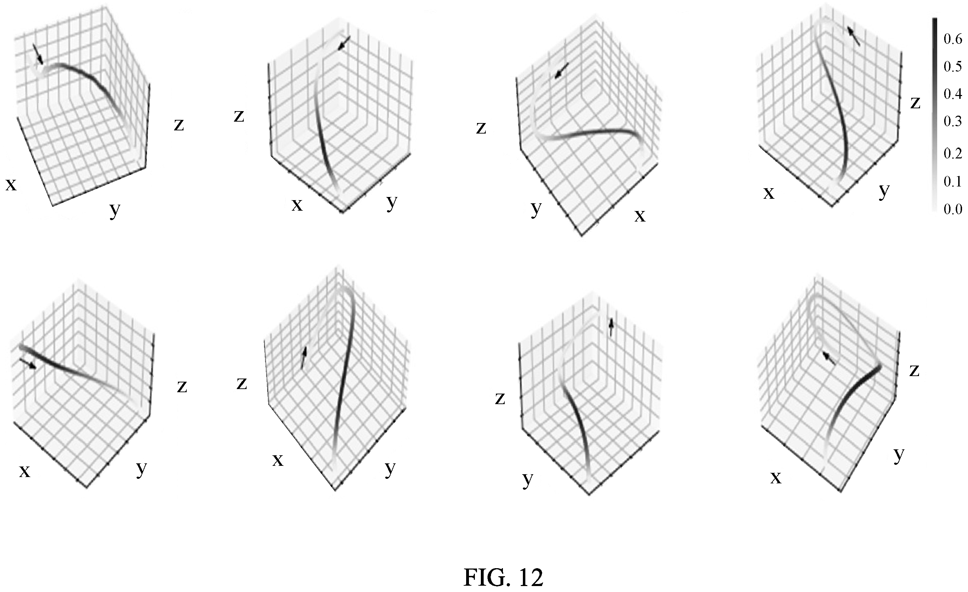

In addition, by using the method provided in this embodiment of this application, a plurality of random robot trajectories are generated. In FIG. 12, 8 trajectories and speed lines are displayed in 3D coordinate systems formed by x-axes, y-axes, and z-axes. A trajectory in each speed line having a smaller transparency indicates a higher speed. A position at which an arrow is located indicates a start point of the trajectory, and the arrow points to a moving direction. From FIG. 12, in most cases, a robot starts to accelerate, then decelerates, and finally stops at an end point. In addition, the robot usually decelerates before approaching a turning point which is highly curved and where collision may occur, and then accelerates or decelerates on a flatter path, which is similar to the motion law of a human. Compared with a straight line or a plane trajectory, a curved trajectory has been widely proven to be more expressive, and the experimental results show that the method provided in this embodiment of this application can exhibit the human mimic temporal feature in a trajectory by using the learned spatial-temporal correlation, thereby reflecting intentions or emotions of a robot.

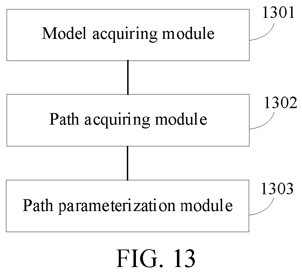

FIG. 13 is a schematic structural diagram of a path parameterization apparatus provided in an embodiment of this application. Referring to FIG. 13, the apparatus includes:
a model acquiring module 1301, configured to acquire a path parameterization model, the path parameterization model being trained on sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path;
a path acquiring module 1302, configured to acquire a first path, and respective first coordinates of at least two first path points in the first path; and
a path parameterization module 1303, configured to determine first trajectory data based on the first coordinates, the first trajectory data including respective first timestamps corresponding to the at least two first path points, and the first trajectory data being used for controlling a robot to move on the first path in a manner that the robot reaches the at least two first path points at respective first path point instants indicated by the first timestamps.

In this embodiment of this application, the path parameterization model is trained based on the sample trajectory data. The sample trajectory data includes the respective sample coordinates and respective sample timestamps of the at least two sample path points in the sample path, and the sample timestamps indicate the respective sample path point instants at which the training object reaches the at least two sample path points in the process of passing through the sample path. Therefore, the sample trajectory data is trajectory data conforming to the law of motion of the training object, and the trained path parameterization model has an ability to generate the trajectory data conforming to the law of motion of the training object. Therefore, by determining trajectory data corresponding to path data of a robot using the path parameterization model, it is ensured that the trajectory data includes features of the training object, better conforms to the law of motion of the training object, and improves the rationality of the trajectory data. When the trajectory data is applied to control the robot to move on the path, the motion of the robot better conforms to a motion habit of the training object.

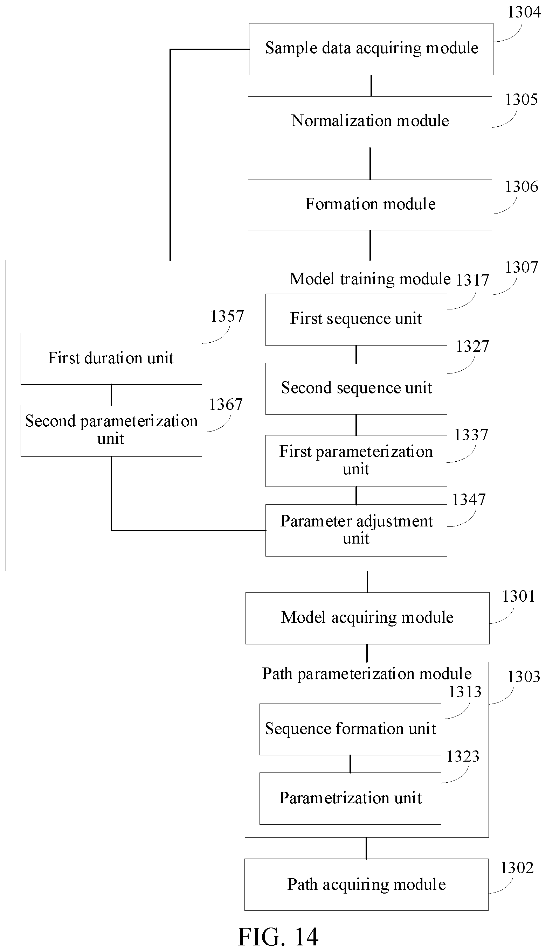

In a possible implementation, referring to FIG. 14, the path parameterization module 1303 includes:
a sequence formation unit 1313, configured to determine a first coordinate sequence based on the respective first coordinates of the at least two first path points; and
a parameterization unit 1323, configured to determine, by the path parameterization model, a first timestamp sequence and a first duration corresponding to the first coordinate sequence, the first duration representing a duration for a robot to pass through a first path.

In a possible implementation, the path parameterization model includes at least one encoder, at least one decoder, a normalization layer, and a summation layer, and the parameterization unit 1323 is configured to:
encode the first coordinate sequence by the at least one encoder to obtain an encoded feature;
decode the encoded feature by the at least one decoder to obtain a decoded feature;
normalize the decoded feature by the normalization layer to obtain the first timestamp sequence; and
sum the decoded feature by the summation layer to obtain the first duration.

In a possible implementation, referring to FIG. 14, the apparatus further includes:
a sample data acquiring module 1304, configured to acquire first sample trajectory data, the first sample trajectory data including initial sample coordinates and initial sample timestamps of at least two sample path points;
a normalization module 1305, configured to normalize the initial sample coordinates and the initial sample timestamps of the at least two sample path points, to obtain normalized sample coordinates and normalized sample timestamps of the at least two sample path points;
a formation module 1306, configured to form second sample trajectory data with the normalized sample coordinates and the normalized sample timestamps of the at least two sample path points; and
a model training module 1307, configured to train the path parameterization model based on the second sample trajectory data.

In a possible implementation, the normalization module 1305 is configured to:
determine a normalized sample coordinate of each sample path point based on an initial sample coordinate of each sample path point and an initial sample coordinate of a starting sample path point of the at least two sample path points;
determine a difference between a sample timestamp of each sample path point and a sample timestamp of the first sample path point as a duration corresponding to each sample path point respectively, the duration corresponding to the sample path point being a duration from the first sample path point to the sample path point; and
determine a ratio of the duration corresponding to each sample path point to a duration corresponding to a last sample path point in the at least two sample path points, as a normalized sample timestamp of each sample path point.

In a possible implementation, referring to FIG. 14, the apparatus further includes:
a sample data acquiring module 1304, configured to acquire a demo video, the demo video including pictures of the training object passing through the sample path; and acquire the sample trajectory data based on coordinates of the training object in the pictures of the demo video and timestamps corresponding to the pictures; and
a model training module 1307, configured to train the path parameterization model based on the sample trajectory data.

In a possible implementation, referring to FIG. 14, the apparatus further includes a model training module 1307, and the model training module 1307 includes:
a first sequence unit 1317, configured to form a coordinate sequence with the coordinates of the at least two sample path points;
a second sequence unit 1327, configured to form a first sample timestamp sequence with the sample timestamps of the at least two sample path points;
a first parameterization unit 1337, configured to determine, by the path parameterization model, a second sample timestamp sequence corresponding to the coordinate sequence; and
a parameter adjustment unit 1347, configured to adjust model parameters of the path parameterization model based on an error between the first sample timestamp sequence and the second sample timestamp sequence.

In a possible implementation, referring to FIG. 14, the model training module 1307 further includes:
a first duration unit 1357, configured to determine a difference between a sample timestamp of a last sample path point and a sample timestamp of a starting sample path point, as a first duration;
a second parameterization unit 1367, configured to determine, by the path parameterization model, a second duration corresponding to the second sample timestamp sequence, the second duration representing a duration predicted by the path parameterization model for passing through the sample path; and
a parameter adjustment unit 1347, configured to adjust the model parameters of the path parameterization model based on the error between the first sample timestamp sequence and the second sample timestamp sequence and an error between the first duration and the second duration.

In a possible implementation, the error between the first sample timestamp sequence and the second sample timestamp sequence includes a first error and a second error.

A distance between the sample timestamp of each sample path point in the first sample timestamp sequence and the sample timestamp of the same sample path point in the second sample timestamp sequence is positively correlated with the first error.

A distance between the second duration and the first duration is positively correlated with the second error.

The apparatus for controlling robot motion provided in the foregoing embodiment is described only using division of the foregoing functional modules as an example. In practical applications, the foregoing functions may be allocated to and completed by different functional modules as required. In other words, an internal structure of a computer device is divided into different functional modules to complete all or some of the functions described above. In addition, the apparatus for controlling robot motion provided in the foregoing embodiment belongs to the same idea as the method for controlling robot motion embodiment. For details of a specific implementation process thereof, reference is made to the method embodiment, and descriptions thereof are omitted herein.

An embodiment of this application further provides an apparatus for controlling robot motion, and the apparatus includes:
a model acquiring module, configured to acquire a path parameterization model, the path parameterization model being trained on sample trajectory data, the sample trajectory data including respective sample coordinates and respective sample timestamps of at least two sample path points in a sample path, and the sample timestamps indicating respective sample path point instants at which a training object reaches the at least two sample path points when passing through the sample path;
a path acquiring module, configured to acquire a second path, and at least two second timestamps;
a path parameterization module, configured to determine, by the path parameterization model, second trajectory data based on the second timestamps, the second trajectory data including respective second coordinates corresponding to at least two second path points, and the second trajectory data being used for controlling a robot to move on the second path in a manner that the robot reaches the at least two second path points at respective second path point instants indicated by the second timestamps.

In some embodiments, the path parameterization module is configured to determine a second timestamp sequence and a second duration based on the at least two second timestamps, the second duration representing a duration for the robot to pass through the second path; and
determine, by the path parameterization model, a second coordinate sequence corresponding to the second timestamp sequence and the second duration, the second coordinate sequence including the respective second coordinates corresponding to the at least two second path points.

An embodiment of this application further provides a computer device, including a processor and a memory. The memory has at least one computer program stored therein, and the at least one computer program is loaded and executed by the processor to implement operations executed in the method for controlling robot motion in the forgoing embodiments.

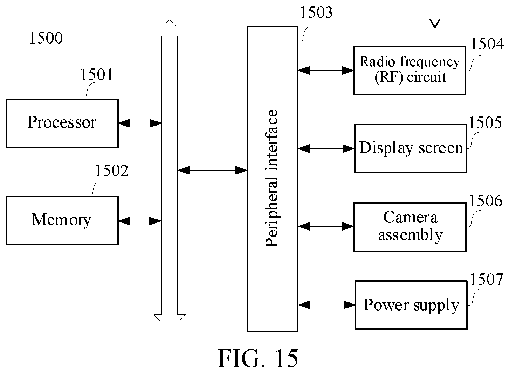

FIG. 15 shows a schematic structural diagram of a computer device 1500 provided in an exemplary embodiment of this application.

The computer device 1500 includes a processor 1501 and a memory 1502.

The processor 1501 may include one or more processing cores, such as a 4-core processor and an 8-core processor. The processor 1501 may be implemented in at least one hardware form of digital signal processing (DSP), field programmable gate array (FPGA), and programmable logic array (PLA). The processor 1501 may further include a main processor and a coprocessor. The main processor is a processor configured to process data in a wakeup state, and is also referred to as a central processing unit (CPU). The coprocessor is a low power consumption processor configured to process data in a standby state. In a possible implementation, the processor 1501 may be integrated with a graphics processing unit (GPU). The GPU is configured to render and draw the content that needs to be displayed on a display screen. In some embodiments, the processor 1501 may further include an artificial intelligence (AI) processor. The AI processor is configured to process computing operations related to machine learning.

The memory 1502 may include one or more computer-readable storage media. The computer-readable storage media may be non-transient. The memory 1502 may further include a high-speed random access memory and a non-volatile memory, for example, one or more disk storage devices and flash storage devices. In a possible implementation, the non-transient computer-readable storage medium in the memory 1502 is configured to store at least one computer program. The at least one computer program is configured to be executed by the processor 1501 to implement the methods for controlling robot motion provided in the method embodiments of this application.

In a possible implementation, the computer device 1500 further includes a peripheral interface 1503 and at least one peripheral. The processor 1501, the memory 1502, and the peripheral interface 1503 may be connected via a bus or a signal cable. Each peripheral may be connected to the peripheral interface 1503 via the bus, the signal cable, or a circuit board. In some embodiments, the peripheral includes: at least one of a radio frequency (RF) circuit 1504, a display screen 1505, a camera component 1506, and a power supply 1507.

The peripheral interface 1503 may be configured to connect at least one input/output (I/O)-related peripheral to the processor 1501 and the memory 1502. In a possible implementation, the processor 1501, the memory 1502, and the peripheral interface 1503 are integrated on the same chip or circuit board. In some other embodiments, any one or two of the processor 1501, the memory 1502, and the peripheral interface 1503 may be implemented on a separate chip or circuit board, which is not limited in this embodiment.

The RF circuit 1504 is configured to receive and transmit an RF signal, which is also referred to as an electromagnetic signal. The radio frequency circuit 1504 communicates with a communication network and other communication devices via the electromagnetic signal. The RF circuit 1504 converts an electric signal into an electromagnetic signal for transmission, or converts a received electromagnetic signal into an electric signal. In some embodiments, the RF circuit 1504 includes: an antenna system, an RF transceiver, one or more amplifiers, a tuner, an oscillator, a digital signal processor, a codec chip set, a subscriber identity module card, and the like. The RF circuit 1504 may communicate with other devices through at least one wireless communication protocol. The wireless communication protocol includes, but is not limited to: a metropolitan area network, generations of mobile communication networks (2G, 3G, 4G, and 5G), a wireless local area network, and/or a wireless fidelity (Wi-Fi) network. In a possible implementation, the RF circuit 1504 may further include a near field communication (NFC)-related circuit, which is not limited in this application.

The display screen 1505 is configured to display a user interface (UI). The UI may include graphics, text, icons, videos, and any combination thereof. When the display screen 1505 is a touch display screen, the display screen 1505 further has an ability to collect a touch signal on or above a surface of the display screen 1505. The touch signal may be inputted, as a control signal, into the processor 1501 for processing. In this case, the display screen 1505 may be further configured to provide a virtual button and/or a virtual keyboard, which is also referred to as a soft button and/or a soft keyboard. In a possible implementation, one display screen 1505 may be disposed on a front panel of the computer device 1500. In some other embodiments, at least two display screens 1505 may be disposed on different surfaces of the computer device 1500 respectively or in a folded design. In some other embodiments, the display screen 1505 may be a flexible display screen, and is disposed on a curved surface or a folded surface of the computer device 1500. The display screen 1505 may be even disposed in a non-rectangular irregular shape, namely, a special-shaped screen. The display screen 1505 may be produced from materials such as a liquid crystal display (LCD) or an organic light-emitting diode (OLED).

The camera component 1506 is configured to capture images or videos. In some embodiments, the camera component 1506 includes a front camera and a rear camera. The front camera is disposed on a front panel of the computer device 1500, and the rear camera is disposed on the rear side of the computer device 1500. In a possible implementation, at least two rear cameras are disposed, and are respectively any of a main camera, a depth-of-field camera, a wide-angle camera, and a telephoto camera, to achieve a background blur function through fusion of the main camera and the depth-of-field camera, achieve panoramic photographing and virtual reality (VR) photographing functions through fusion of the main camera and the wide-angle camera, or achieve other fusion photographing functions. In a possible implementation, the camera component 1506 may further include a flash. The flash may be a single-color temperature flash or a double-color temperature flash. The double-color temperature flash is a combination of a warm flash and a cold flash, and may be configured to perform light ray compensation at different color temperatures.

The power supply 1507 is configured to supply power to components in the computer device 1500. The power supply 1507 may be an alternating current, a direct current, a primary battery, or a rechargeable battery. When the power supply 1507 includes a rechargeable battery, the rechargeable battery may support wired recharging or wireless recharging. The rechargeable battery may further be configured to support a fast recharging technology.

A person skilled in the art may understand that the structure shown in FIG. 15 does not constitute any limitation on the computer device 1500, and the computer device 1500 may include more or fewer components than those shown in the figure, combine some components, or use a different deployment of components.

An embodiment of this application further provides a computer-readable storage medium, having at least one computer program stored therein. The at least one computer program is loaded and executed by a processor, to implement the operations executed in the methods for controlling robot motion according to the forgoing embodiments.

An embodiment of this application further provides a computer program product, including a computer program. The computer program, when loaded and executed by a processor, implements the operations executed in the methods for controlling robot motion according to the forgoing embodiments.

A person of ordinary skill in the art may understand that all or some of the operations in the foregoing embodiments may be implemented by hardware, or may be implemented by related hardware instructed by a program. The program may be stored in a computer-readable storage medium. The aforementioned storage medium may be a read-only memory, a magnetic disk, an optical disc, or the like.

The above descriptions are merely exemplary embodiments of the embodiments of this application, and are not intended to limit the embodiments of this application. Any modification, equivalent replacement, improvement, or the like made within the spirit and principle of the embodiments of this application falls within the protection scope of this application.

## Claims

1. A method for controlling robot motion, executable by a computer device, the method comprising:
acquiring a path parameterization model, the path parameterization model being trained on sample trajectory data, the sample trajectory data comprising respective sample coordinates and respective sample timestamps of at least two sample path points in a sample path, and the sample timestamps indicating respective sample path point instants at which a training object reaches the at least two sample path points when passing through the sample path;
acquiring a first path, and respective first coordinates of at least two first path points in the first path; and
determining, by the path parameterization model, first trajectory data based on the first coordinates, the first trajectory data comprising respective first timestamps corresponding to the at least two first path points, and the first trajectory data being used for controlling a robot to move on the first path in a manner that the robot reaches the at least two first path points at respective first path point instants indicated by the first timestamps.

2. The method according to claim 1, wherein the determining, by the path parameterization model, first trajectory data based on the first coordinates comprises:
determining a first coordinate sequence based on the respective first coordinates of the at least two first path points; and
determining, by the path parameterization model, a first timestamp sequence and a first duration corresponding to the first coordinate sequence, the first duration representing a duration for the robot to pass through the first path.

3. The method according to claim 2, wherein the path parameterization model comprises at least one encoder, at least one decoder, a normalization layer, and a summation layer, and the determining, by the path parameterization model, a first timestamp sequence and a first duration corresponding to the first coordinate sequence comprises:
encoding the first coordinate sequence by the at least one encoder to obtain an encoded feature;
decoding the encoded feature by the at least one decoder to obtain a decoded feature;
normalizing the decoded feature by the normalization layer to obtain the first timestamp sequence; and
summing the decoded feature by the summation layer to obtain the first duration.

4. The method according to any one of claims 1 to 3, further comprising:
acquiring first sample trajectory data, the first sample trajectory data comprising initial sample coordinates and initial sample timestamps of at least two sample path points;
normalizing the initial sample coordinates and the initial sample timestamps of the at least two sample path points, to obtain normalized sample coordinates and normalized sample timestamps of the at least two sample path points;
forming second sample trajectory data with the normalized sample coordinates and the normalized sample timestamps of the at least two sample path points; and
training the path parameterization model based on the second sample trajectory data.

5. The method according to claim 4, wherein the normalizing the initial sample coordinates and the initial sample timestamps of the at least two sample path points, to obtain normalized sample coordinates and normalized sample timestamps of the at least two sample path points comprises:
determining a normalized sample coordinate of each sample path point based on an initial sample coordinate of each sample path point and an initial sample coordinate of a starting sample path point of the at least two sample path points;
determining a difference between a sample timestamp of each sample path point and a sample timestamp of the starting sample path point as a duration corresponding to each sample path point, the duration corresponding to the sample path point being a duration from the starting sample path point to the sample path point; and
determining a ratio of the duration corresponding to each sample path point to a duration corresponding to a last sample path point in the at least two sample path points, as a normalized sample timestamp of each sample path point.

6. The method according to any one of claims 1 to 5, further comprising:
acquiring a demo video, the demo video comprising pictures of the training object passing through the sample path;
acquiring the sample trajectory data based on coordinates of the training object in the pictures of the demo video and timestamps corresponding to the pictures; and
training the path parameterization model based on the sample trajectory data.

7. The method according to any one of claims 1 to 6, wherein the training the path parameterization model based on the sample trajectory data comprises:
forming a sample coordinate sequence with the sample coordinates of the at least two sample path points;
forming a first sample timestamp sequence with the sample timestamps of the at least two sample path points;
determining, by the path parameterization model, a second sample timestamp sequence corresponding to the sample coordinate sequence; and
adjusting model parameters of the path parameterization model based on an error between the first sample timestamp sequence and the second sample timestamp sequence.

8. The method according to claim 7, wherein the training the path parameterization model based on the sample trajectory data further comprises:
determining a difference between a sample timestamp of a last sample path point of the at least two sample path points and a sample timestamp of a starting sample path point of the at least two sample path points, as a first duration;
determining, by the path parameterization model, a second duration corresponding to the second sample timestamp sequence, the second duration representing a duration predicted by the path parameterization model for passing through the sample path; and
the adjusting model parameters of the path parameterization model based on an error between the first sample timestamp sequence and the second sample timestamp sequence comprises:
adjusting the model parameters of the path parameterization model, based on the error between the first sample timestamp sequence and the second sample timestamp sequence and an error between the first duration and the second duration.

9. The method according to claim 8, wherein the error between the first sample timestamp sequence and the second sample timestamp sequence comprises a first error and a second error;
a distance between the sample timestamp of each sample path point in the first sample timestamp sequence and the sample timestamp of the same sample path point in the second sample timestamp sequence is positively correlated with the first error; and
a distance between the second duration and the first duration is positively correlated with the second error.

10. A method for controlling robot motion, executable by a computer device, the method comprising:
acquiring a path parameterization model, the path parameterization model being trained on sample trajectory data, the sample trajectory data comprising respective sample coordinates and respective sample timestamps of at least two sample path points in a sample path, and the sample timestamps indicating respective sample path point instants at which a training object reaches the at least two sample path points when passing through the sample path;
acquiring a second path, and at least two second timestamps;
determining, by the path parameterization model, second trajectory data based on the second timestamps, the second trajectory data comprising respective second coordinates corresponding to at least two second path points, and the second trajectory data being used for controlling a robot to move on the second path in a manner that the robot reaches the at least two second path points at respective second path point instants indicated by the second timestamps.

11. The method according to claim 10, wherein the determining, by the path parameterization model, the second trajectory data based on the second timestamps comprises:
determining a second timestamp sequence and a second duration based on the at least two second timestamps, the second duration representing a duration for the robot to pass through the second path; and
determining, by the path parameterization model, a second coordinate sequence corresponding to the second timestamp sequence and the second duration, the second coordinate sequence comprising the respective second coordinates corresponding to the at least two second path points.

12. An apparatus for controlling robot motion, the apparatus comprising:
a model acquiring module, configured to acquire a path parameterization model, the path parameterization model being trained on sample trajectory data, the sample trajectory data comprising respective sample coordinates and respective sample timestamps of at least two sample path points in a sample path, and the sample timestamps indicating respective sample path point instants at which a training object reaches the at least two sample path points when passing through the sample path;
a path acquiring module, configured to acquire a first path, and respective first coordinates of at least two first path points in the first path; and
a path parameterization module, configured to determine first trajectory data based on the first coordinates, the first trajectory data comprising respective first timestamps corresponding to the at least two first path points, and the first trajectory data being used for controlling a robot to move on the first path in a manner that the robot reaches the at least two first path points at respective first path point instants indicated by the first timestamps.

13. An apparatus for controlling robot motion, the apparatus comprising:
a model acquiring module, configured to acquire a path parameterization model, the path parameterization model being trained on sample trajectory data, the sample trajectory data comprising respective sample coordinates and respective sample timestamps of at least two sample path points in a sample path, and the sample timestamps indicating respective sample path point instants at which a training object reaches the at least two sample path points when passing through the sample path;
a path acquiring module, configured to acquire a second path, and at least two second timestamps;
a path parameterization module, configured to determine, by the path parameterization model, second trajectory data based on the second timestamps, the second trajectory data comprising respective second coordinates corresponding to at least two second path points, and the second trajectory data being used for controlling a robot to move on the second path in a manner that the robot reaches the at least two second path points at respective second path point instants indicated by the second timestamps.

14. A computer device, comprising a processor and a memory, the memory having at least one computer program stored therein, and the at least one computer program being loaded and executed by the processor to implement operations executed in the robot motion control method according to any one of claims 1 to 11.

15. A computer-readable storage medium, having at least one computer program stored therein, the at least one computer program being loaded and executed by a processor to implement operations executed in the robot motion control method according to any one of claims 1 to 11.

16. A computer program product, comprising a computer program, the computer program being loaded and executed by a processor to implement operations executed in the robot motion control method according to any one of claims 1 to 11.
